# EUROPEAN PATENT SPECIFICATION

(11) **EP 4 407 969 B1**
(45) Date of publication and mention of the grant of the patent: **11.02.2026**
(21) Application number: 23818814.8
(22) Date of filing: 10.04.2023
(51) Int. Cl.: H04M 1/72484, H04M 1/57, H04M 1/725, H04M 1/72412

(54) **INCOMING CALL DISPLAY METHOD AND ELECTRONIC DEVICES**
VERFAHREN ZUR ANZEIGE EINGEHENDER ANRUFE UND ELEKTRONISCHE VORRICHTUNGEN
PROCÉDÉ D'AFFICHAGE D'APPEL ENTRANT ET DISPOSITIFS ÉLECTRONIQUES

(30) Priority: 10.06.2022 CN 202210653682
(43) Date of publication of application: 31.07.2024
(73) Proprietor: Honor Device Co., Ltd., Shenzhen, Guangdong 518040 (CN)
(72) Inventor: CHEN, Jiazi, Shenzhen, Guangdong 518040 (CN); GE, Feng, Shenzhen, Guangdong 518040 (CN)
(74) Representative: Gill Jennings & Every LLP
(86) International application number: PCT/CN2023/087347
(87) International publication number: WO 2023/236646

(56) References cited:
- EP-A1- 3 780 676
- WO-A1-2021/057263
- WO-A1-2022/007848
- WO-A1-2022/007848
- CN-A- 110 771 111
- CN-A- 110 771 111
- CN-A- 114 422 639
- CN-A- 114 422 639
- US-A1- 2016 105 540

## Description

This application claims priority to Chinese Patent Application No. 202210653682.0, filed with the China National Intellectual Property Administration on June 10, 2022 and entitled "INCOMING CALL DISPLAY METHOD AND ELECTRONIC DEVICE".

### TECHNICAL FIELD

This application relates to the field of terminal technologies, and in particular, to an incoming call display method and an electronic device.

### BACKGROUND

With the continuous development of an electronic device, use of the electronic device becomes indispensable for people's life. For example, a mobile phone is a call device (that is, a device that can connect a mobile communication network) that has a mobile communication capability, and a person can use the mobile phone to make a call. A personal computer is an electronic device that has a strong computing capability, and a person can use the personal computer for office work. A tablet computer is a large-screen portable device, and a person can use the tablet computer for light-loaded office work and entertainment.

Usually, among electronic devices frequently used by people, the mobile phone is used for making and answering a call, and another electronic device (for example, the personal computer or the tablet computer) that does not have the mobile communication capability cannot provide a function of making and answering a call. In view of this, how to better enable an electronic device without a call capability to have the call capability is a problem to be solved. WO2022007848A1 discloses a call system where incoming call notifications and audio transmissions are exchanged between Bluetooth-connected devices using the Hands-Free Profile and the Serial Port Profile.

### SUMMARY

Embodiments of this application provide an incoming call display method and an electronic device, so that an electronic device that does not have a mobile communication capability can be endowed with a call capability, and display device information of an electronic device that is actually called. In this way, a user can immediately learn which electronic device is called.

According to a first aspect, this application provides an incoming call display method. The method is performed by a first electronic device, a short-distance communication connection is established between the first electronic device and a second electronic device, the first electronic device and the second electronic device both have an independent mobile communication capability, and the method includes:
when receiving a first incoming call from a third electronic device, in response to the first incoming call, presenting an incoming call interface of the first incoming call, where the incoming call interface of the first incoming call displays a phone number of a calling party of the first incoming call; and
when receiving a second incoming call event sent by the second electronic device, in response to the second incoming call event, presenting an incoming call interface of the second incoming call, where the incoming call interface of the second incoming call displays a phone number of a calling party of the second incoming call, a device name and/or a device type of the second electronic device, and a first incoming call mark, and the first incoming call mark indicates that the second incoming call is an incoming call that is received by the second electronic device and forwarded to the first electronic device.

In this implementation, the first electronic device has the independent mobile communication capability, that is, the first electronic device can independently receive an incoming call of another electronic device. For example, when the third electronic device calls the first electronic device, the third electronic device is a calling party, and the first electronic device is an answering party. In this case, the first electronic device can present an incoming call interface of the incoming call (namely, the first incoming call). The incoming call interface of the first incoming call may display a phone number (namely, a phone number of a SIM card installed in the third electronic device) of the calling party, and may further display controls such as an answering control and a hang-up control.

In addition to independently receiving the incoming call of the another electronic device, the first electronic device can further receive an incoming call event synchronized by the another electronic device. For example, when the third electronic device calls the second electronic device (that is, the second incoming call), the third electronic device is a calling party, and the second electronic device is an answering party. The second electronic device can synchronize an incoming call event to the first electronic device, and the user can answer the second incoming call by using the first electronic device. In this case, the first electronic device may present an incoming call interface of the second incoming call. Different from the incoming call interface of the first incoming call, the incoming call interface of the second incoming call may further display the device information (for example, the device name and/or device type) of the second electronic device and the first incoming call mark in addition to a phone number of the calling party. Optionally, different from a normal incoming call mark, the first incoming call mark may be some special symbols, for example, a flash symbol, and indicates that the incoming call is an incoming call synchronized by the second electronic device, and is not an incoming call independently received by the first electronic device.

For a specific implementation of a case in which the first electronic device receives the second incoming call event sent by the second electronic device, refer to descriptions in the following second aspect.

Therefore, when the first electronic device receives the second incoming call event sent by the second electronic device, the second electronic device synchronizes the incoming call event that includes the device name and the device type to the first electronic device, so that the first electronic device can display the device information of the second electronic device that synchronizes the incoming call. In this way, the user can immediately learn which electronic device is called, which is convenient for the user to determine whether to answer the call, thereby improving user use experience.

According to a second aspect, this application provides an incoming call display method. The method is performed by a first electronic device, a short-distance communication connection is established between the first electronic device and a second electronic device, the first electronic device does not have an independent mobile communication capability, the second electronic device has an independent mobile communication capability, and the method includes: receiving a second incoming call event sent by the second electronic device, where the second incoming call event is generated by second electronic device based on a second incoming call received by the second electronic device; in response to the second incoming call event, presenting an incoming call interface of the second incoming call, where the incoming call interface of the second incoming call displays a phone number of a calling party of the second incoming call, a device name and/or a device type of the second electronic device, and a first incoming call mark, and the first incoming call mark indicates that the second incoming call is an incoming call that is received by the second electronic device and forwarded to the first electronic device.

In this implementation, the first electronic device does not have an independent mobile communication capability, but the first electronic device can receive an incoming call event synchronized by another electronic device, for example, can receive the second incoming call event synchronized by the second electronic device, and present the incoming call interface of the second incoming call. The incoming call interface of the second incoming call further displays device information (for example, the device name and/or the device type) of the second electronic device and the first incoming call mark in addition to the phone number of the calling party. The user can answer the incoming call by using the first electronic device. In this way, a mobile communication capability is endowed to the first electronic device. In addition, the first electronic device displays the device information of the second electronic device that synchronizes the incoming call, so that the user can immediately learn which electronic device is called, which is convenient for the user to decide whether to answer the incoming call, thereby improving user use experience.

With reference to the second aspect, in some implementations of the second aspect, the incoming call interface of the second incoming call further displays subscriber identification module SIM card information of the phone number of an answering party corresponding to the second incoming call in the second electronic device.

Optionally, the SIM card information and the device name and/or the device type of the second electronic device may be alternately displayed in the incoming call interface of the second incoming call.

It can be learned from the foregoing description, the answering party of the second incoming call is the second electronic device, and the phone number of the answering party corresponds to a SIM card in the second electronic device. For example, a SIM card 1 in the second electronic device corresponds to the phone number of the answering party, and therefore, information of the SIM card can be displayed in the incoming call interface of the second incoming call. In this way, in addition to learning which electronic device is called, the user can further learn which SIM card in the electronic device is called. This further improves user use experience.

With reference to the second aspect, in some implementations of the second aspect, the incoming call interface of the second incoming call is presented in a display of the first electronic device in a full-screen display manner, or is displayed in the display of the first electronic device in a notification bar display manner.

The incoming call interface of the second incoming call may be displayed in the full-screen manner, or may be displayed in the notification bar manner. When displayed in the notification bar manner, the incoming call interface of the second incoming call does not affect display content of another application running on the first electronic device.

In a feasible implementation, when the incoming call interface of the second incoming call is displayed in the full-screen manner, the incoming call interface of the second incoming call further displays a first answering control, and the first answering control displays the first incoming call mark.

In this implementation, if the incoming call interface of the second incoming call is displayed in the full-screen manner, the first incoming call mark can be displayed in the first answering control in the incoming call interface. For example, when the first incoming call mark is a flash symbol, the flash symbol is displayed in the answering control, and can be used to distinguish between an incoming call synchronized by the second electronic device and an incoming call independently answered by the first electronic device, to further prompt the user an incoming call type of the incoming call.

In another feasible implementation, when the incoming call interface of the second incoming call is displayed in the notification bar display manner, the first incoming call mark includes a first icon, and a display location of the first icon is in front of a display location of the device name and/or the device type of the second electronic device.

In this implementation, if the incoming call interface of the second incoming call is displayed in the notification bar manner, one first icon may be first displayed in the incoming call interface, for example, an icon that is different from the flash symbol and also can indicate that the incoming call is an incoming call synchronized by the second electronic device. The icon may be displayed in front of the device name and/or the device type of the second electronic device, to prompt the user.

Then, after the first icon is displayed for preset duration (for example, 1 to 2 seconds), a second icon may be displayed in the incoming call interface of the second incoming call. In this case, the incoming call interface of the second incoming call further displays a first answering control, and the second icon is displayed on the first answering control. The second icon may be the foregoing flash symbol.

Optionally, when the second icon and the first answering control are displayed, the first icon disappears. In other words, in the incoming call interface of the second incoming call, the first icon is first displayed, and the second icon and the first answering control are switched to and displayed. Optionally, in this case, in a location at which the first icon is displayed, an incoming call icon of a normal incoming call may be switched to and displayed.

Therefore, in the incoming call interface of the second incoming call, in addition to the device information of the second electronic device, a mark that indicates that a current incoming call is an incoming call synchronized by the second electronic device may be further displayed. In this way, the user can immediately learn that another electronic device is currently called, and further learn which electronic device is called, thereby improving user use experience.

With reference to the second aspect, in some implementations of the second aspect, after the presenting an incoming call interface of the second incoming call, the method further includes: receiving a first touch operation by the user on the first answering control; and in response to the first touch operation, presenting a call interface of the second incoming call, where the call interface of the second incoming call displays the phone number of the calling party of the second incoming call, the device name and/or the device type of the second electronic device, and call duration.

If the user answers the second incoming call on the first electronic device, the first electronic device may present the call interface of the second incoming call. The device name and/or the device type of the second electronic device may also be displayed in the call interface, so that the user can check in real-time in a call process which electronic device is currently called, thereby improving user use experience.

With reference to the second aspect, in some implementations of the second aspect, after the presenting a call interface of the second incoming call, the method further includes: receiving a third incoming call event sent by the second electronic device, where the third incoming call event is generated by second electronic device based on a third incoming call received by the second electronic device; and in response to the third incoming call event, simultaneously presenting the call interface of the second incoming call and an incoming call interface of the third incoming call, where the incoming call interface of the third incoming call displays a phone number of a calling party of the third incoming call, the device name and/or the device type of the second electronic device, and a second incoming call mark, and the third incoming call mark indicates that the third incoming call is an incoming call that is received by the second electronic device and forwarded to the first electronic device.

In this implementation, in a process in which the user uses the first electronic device to answer the second incoming call, if the second electronic device further receives a new incoming call (namely, the third incoming call), the second electronic device may also synchronize the third incoming call event to the first electronic device. In this case, the first electronic device may simultaneously present the call interface of the second incoming call and the incoming call interface of the third incoming call. In addition to the phone number of the calling party, the device information (for example, the device name and/or device type) of the second electronic device and the second incoming call mark may be further displayed in the incoming call interface of the third incoming call. Therefore, the first electronic device displays the device information of the second electronic device that synchronizes the incoming call, so that the user can immediately learn which electronic device is called for the new incoming call, which is convenient for the user to decide whether to switch to answering the new incoming call, thereby improving user use experience.

With reference to the second aspect, in some implementations of the second aspect, the incoming call interface of the third incoming call includes a second answering control, and after the presenting the call interface of the second incoming call and an incoming call interface of the third incoming call, the method further includes: receiving a second touch operation by the user on the second answering control; and in response to the second touch operation, presenting a call interface of the third incoming call, where the call interface of the third incoming call displays the phone number of the calling party of the third incoming call, the device name and/or the device type of the second electronic device, call duration, and call status information of the second incoming call, and the call status information indicates that the call corresponding to the second incoming call is in an on-hold state.

If the user switch to answering the third incoming call when answering the second incoming call, the phone number of the calling party of the third incoming call, the device name and/or the device type of the second electronic device, and the call status information of the second incoming call are displayed in the call interface of the third incoming call, and the second incoming call is in the on-hold state. Therefore, even if the user switches an answered incoming call, the device name and/or the device type of the second electronic device is still displayed in the interface of the first electronic device, to facilitate checking by the user at any time.

With reference to the second aspect, in some implementations of the second aspect, the call interface of the second incoming call includes a hang-up control, and the method further includes: receiving a third touch operation by the user on the hang-up control; and in response to the third touch operation, generating and displaying a call record corresponding to the second incoming call, where the call record includes the device name and/or the device type of the second electronic device.

When the user hangs up the second incoming call, the first electronic device can still generate a call record corresponding to the second incoming call, and the call record also includes the device name and/or the device type of the second electronic device. Therefore, by checking the call record, the user can conveniently recognize whether a call record is a call record of an incoming call synchronized by another electronic device, or is a call record of an incoming call independently answered by the first electronic device.

With reference to the second aspect, in some implementations of the second aspect, the method further includes: receiving a call making operation by the user; and in response to the call making operation, invoking the mobile communication capability of the second electronic device to make a call, and presenting a call making interface, where the call making interface displays a called phone number and the device name and/or the device type of the second electronic device.

When the first electronic device does not have the independent mobile communication capability, if the user still wants to make a call by using the first electronic device, the mobile communication capability of the second electronic device may be synchronized to display a dialing interface. In the dialing interface, the user can perform a call making operation, and a call making interface is presented, where the device name and/or the device type of the second electronic device is displayed on the call making interface. Therefore, the user can learn which electronic device is actually used to make the call, thereby improving user use experience.

According to a third aspect, this application provides an incoming call display method. The method is performed by a second electronic device, a short-distance is established between a first electronic device and the second electronic device, the second electronic device has an independent mobile communication capability, and the method includes: if a second incoming call is received, generating a second incoming call event based on first information, where the first information includes a phone number of a calling party of the second incoming call, a device name and/or a device type of the second electronic device, and SIM card information of a phone number of an answering party corresponding to the second incoming call in the second electronic device; and sending the second incoming call event to the first electronic device.

In this implementation, the second electronic device can independently receive an incoming call (namely, the second incoming call) of another electronic device. For example, when a third electronic device calls the second electronic device, the third electronic device is a calling party, and the second electronic device is an answering party. In this case, the second electronic device can generate the second incoming call event based on the phone number of the calling party, the device name and/or the device type of the second electronic device, and the SIM card information of the phone number of the answering party corresponding to the second incoming call in the second electronic device, and sends the incoming call event to the first electronic device, so that a user answers the incoming call by using the first electronic device. The first electronic device is endowed with a mobile communication capability.

According to a fourth aspect, this application provides an apparatus. The apparatus is included in an electronic device, and the apparatus has a function of implementing behaviors of the electronic device in the first aspect and the possible implementations in the first aspect, or a function of implementing behaviors of the electronic device in the second aspect and the possible implementations in the second aspect, or a function of implementing behaviors of the electronic device in the third aspect and the possible implementations in the third aspect. The functions may be implemented by using hardware, or may be implemented by hardware executing corresponding software. The hardware or the software includes one or more modules or units corresponding to the functions, for example, a receiving module or unit and a processing module or unit.

According to a fifth aspect, this application provides an electronic device. The electronic device includes: a processor, a memory, and an interface. the processor, the memory, and the interface coordinate with each other, so that the electronic device performs any one of the methods in the technical solutions in the first aspect, or performs any one of the methods in the technical solutions in the second aspect, or performs any one of the methods in the technical solutions in the third aspect.

According to a sixth aspect, this application provides a call system, including a first electronic device and a second electronic device between which a short-distance communication connection is established, the second electronic device has an independent mobile communication capability, the first electronic device is configured to perform any one of the methods in the technical solutions in the first aspect, or perform any one of the methods in the technical solutions in the second aspect, the second electronic device is configured to perform any one of the methods in the technical solutions in the third aspect.

According to a seventh aspect, this application provides a chip, including a processor. The processor is configured to read and execute a computer program stored in a memory, to perform the method in the first aspect and any possible implementation of the first aspect, or the method in the second aspect and any possible implementation of the second aspect, or the method in the third aspect and any possible implementation of the third aspect.

Optionally, the chip further includes a memory, where the memory is connected to the processor through a circuit or a wire.

Further, optionally, the chip further includes a communication interface.

According to an eighth aspect, this application provides a computer-readable storage medium. The computer-readable storage medium stores computer program code. When the computer program code is executed by a processor, the processor is enabled to perform any one of the methods in the technical solutions in the first aspect, or any one of the methods in the technical solutions in the second aspect, or any one of the methods in the technical solutions in the third aspect.

According to a ninth aspect, this application provides a computer program product. The computer program product includes: computer program code, where when the computer program code is run on an electronic device, the electronic device is enabled to perform any one of the methods in the technical solutions in the first aspect, or any one of the methods in the technical solutions in the second aspect, or any one of the methods in the technical solutions in the third aspect.

### BRIEF DESCRIPTION OF DRAWINGS

FIG. 1 is a schematic diagram of an example of displaying an incoming call interface on a mobile phone according to a conventional technology;
FIG. 2 is a schematic diagram of an example of displaying an incoming call interface on a tablet computer according to a conventional technology;
FIG. 3 is a schematic diagram of an example of a structure of an electronic device according to an embodiment of this application;
FIG. 4 is a schematic diagram of an example of a process in which a mobile phone establishes a connection to a PC according to an embodiment of this application;
FIG. 5 is a schematic diagram of an example of displaying an incoming call interface on a mobile phone according to an embodiment of this application;
FIG. 6 is a schematic diagram of an example of displaying an incoming call interface on a PC according to an embodiment of this application;
FIG. 7 is a schematic diagram of an example of displaying an incoming call interface on a tablet computer according to an embodiment of this application;
FIG. 8 is a schematic diagram of another example of displaying an incoming call interface on a tablet computer according to an embodiment of this application;
FIG. 9 is a schematic diagram of another example of displaying an incoming call interface on a PC according to an embodiment of this application;
FIG. 10 is a schematic diagram of still another example of displaying an incoming call interface on a tablet computer according to an embodiment of this application;
FIG. 11 is a schematic diagram of an example of displaying a call interface on a mobile phone according to an embodiment of this application;
FIG. 12 is a schematic diagram of an example of displaying a call interface on a tablet computer according to an embodiment of this application;
FIG. 13 is a schematic diagram of an example of displaying a new incoming call interface on a mobile phone according to an embodiment of this application;
FIG. 14 is a schematic diagram of an example of displaying a call on-hold interface on a mobile phone according to an embodiment of this application;
FIG. 15 is a schematic diagram of an example of displaying a dialing interface on a tablet computer according to an embodiment of this application;
FIG. 16 is a schematic diagram of an example of displaying a calling interface on a tablet computer according to an embodiment of this application;
FIG. 17 is a schematic diagram of another example of displaying a calling interface on a tablet computer according to an embodiment of this application;
FIG. 18 is a schematic diagram of displaying a call record interface on a tablet computer;
FIG. 19 is a block diagram of an example of a software structure of an electronic device according to an embodiment of this application;
FIG. 20 is a schematic flowchart of an example of module interaction of an incoming call method according to an embodiment of this application;
FIG. 21 is a schematic flowchart of another example of module interaction of an incoming call method according to an embodiment of this application;
FIG. 22 is a schematic flowchart of still another example of module interaction of an incoming call method according to an embodiment of this application;
FIG. 23 is a schematic flowchart of still another example of module interaction of an incoming call method according to an embodiment of this application;
FIG. 24 is a schematic flowchart of yet still another example of module interaction of an incoming call method according to an embodiment of this application.

### DESCRIPTION OF EMBODIMENTS

Technical solutions in embodiments of this application are described below with reference to the accompanying drawings in the embodiments of this application. In the descriptions of the embodiments of this application, "/" means "or" unless otherwise specified. For example, A/B may represent A or B. In this specification, "and/or" describes only an association relationship for describing associated objects and indicates that three relationships may exist. For example, A and/or B may represent the following three cases: Only A exists, both A and B exist, and only B exists. In addition, in the descriptions of the embodiments of this application, "a plurality of" represents two or more.

The terms "first", "second", and "third" mentioned below are merely intended for an objective of description, and shall not be understood as an indication or implication of relative importance or implicit indication of the quantity of indicated technical features. Therefore, a feature limited by "first", "second", or "third" may explicitly or implicitly include one or more of the features.

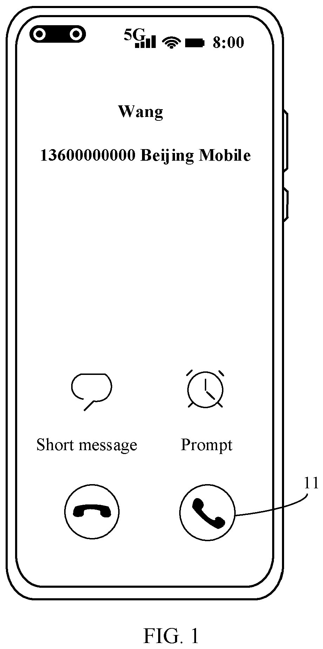

With continuous development of an electronic device, use of the electronic device becomes indispensable for people's life. For example, a mobile phone is a call device that has a mobile communication capability, that is, a device that can be connected to a mobile communication network, and can be used by a person to make or answer a call. Usually, one or more phone cards (namely, subscriber identification module (subscriber identification module, SIM card) cards) need to be inserted into the mobile phone, and a phone number of a user of an opposite party is entered by using a dialing keyboard provided by a call application in the mobile phone, or the phone number of the user of the opposite party is found by using a contact application in the mobile phone, and then a call is made to the user of the opposite party based on a communication capability of the phone card. In addition, when receiving a call made by the user of the opposite party, a user may answer the call by entering a call interface by using an answering control in the mobile phone. For example, FIG. 1 is a schematic diagram of a display interface displayed on a mobile phone when an incoming call from a user of an opposite party is received. There is an answering control 11 in the interface. A user may tap or touch the answering control 11 to have a call with the user of the opposite party.

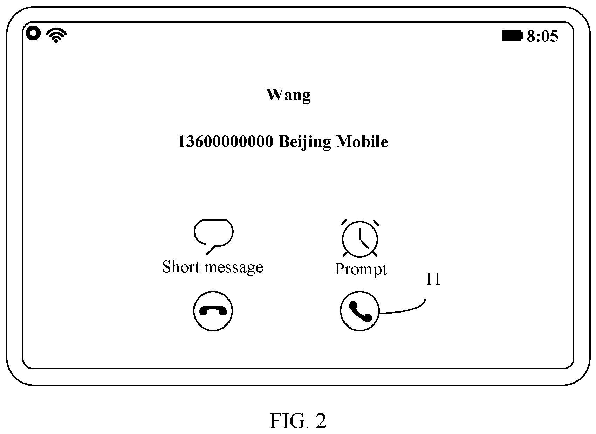

However, in an electronic device without a mobile communication capability, for example, an electronic device like a personal computer, a tablet computer, and a smart watch, the user cannot perform an operation of making and answering a call. Based on this, a super call capability is proposed. The super call capability can enable an electronic device without a call capability to have the call capability, so that the user can use an electronic device like a personal computer or a tablet computer to make and answer a call. In a process of using a super call function, if an electronic device other than a called mobile phone is used for answering a call, for example, a tablet computer is used for answering, an incoming call interface of the user of the opposite party may further be displayed on an interface of the tablet computer. For example, FIG. 2 is a schematic diagram of a display interface displayed on a tablet computer when an incoming call from a user of an opposite party is received. There is also an answering control 11 in the interface. The user may tap or touch the answering control 11 to have a call with the user of the opposite party.

Usually, the reason why an electronic device like a tablet computer has a call capability is that a trust relationship is established between the tablet computer and a called mobile phone, so that the mobile phone can synchronize an incoming call event to the electronic device like the tablet computer. However, as shown in FIG. 2, only incoming call information, such as a user name and a phone number of the user of the opposite party, is displayed on the interface of the tablet computer, and information of the called mobile phone is not displayed. As a result, it is not easy for the user to know which mobile phone of the user is called, especially when the user has a plurality of mobile phones, or a plurality of phone cards are inserted in the mobile phone. It is difficult for the user to recognize the called mobile phone or the called phone number, and consequently, user use experience is low. For example, the user has two phone cards separately correspond to work and life. If only the incoming call information of the user of the opposite party is displayed on the interface of the tablet computer, but which phone card of the user receives the incoming call is not displayed, the user cannot recognize whether the incoming call is for the phone card for life or the phone card for work. This brings poor experience for the user.

In order to resolve the above problem, an embodiment of this application provides an incoming call display method. The method may be applied to a scenario in which a user answer or make a call by using an electronic device without a mobile communication capability, and device information of a called electronic device is displayed on an incoming call interface of the electronic device. For example, the user uses a personal computer in a study or a living room at home, that is, uses an electronic device without a mobile communication capability to play a game or do office work, and a mobile phone is placed in another room. When a user of an opposite party calls the mobile phone of the user, the mobile phone may synchronize an incoming call event to the personal computer, and further synchronize device information (such as a device name and a type) of the mobile phone. In this way, the user can immediately know which mobile phone or which phone number of the user is called, to determine whether to answer the call. This improves user experience.

Alternatively, the incoming call display method provided in this embodiment of this application may further be applied in a scenario in which a user has a plurality of electronic devices that have a mobile communication capability, and when an electronic device is called, another electronic device is used for answering. For example, the user uses a mobile phone 1 to play a game in a bedroom, and a mobile phone 2 is placed in a living room. When a user of an opposite party calls the mobile phone 2 of the user, the mobile phone 2 may synchronize an incoming call event to the mobile phone 1, and further synchronize device information of the mobile phone 2, so that the user can use the mobile phone 1 to answer.

In other words, when an electronic device that has the mobile communication capability receives an incoming call, the electronic device may synchronize an incoming call event to all other electronic devices that have established a trust relationship with the electronic device. The electronic device that has the mobile communication capability is an electronic device that can access a mobile communication network. For example, the mobile communication network may be a long term evolution (long term evolution, LTE) network, a 5th (5th generation, 5G) mobile communication network, a future mobile communication network, a network formed by merging a plurality of mobile communication networks, or the like. This is not limited in this embodiment of this application. The 5G alternatively be referred to as new radio (new radio, NR). That is, the electronic device that has the mobile communication capability can implement a communication connection with another device through a mobile communication network, to provide a function of a voice call, short message receiving and sending, and Internet access for a user. It should be noted that the voice call herein and the foregoing function of making a call refer to a call service provided by the mobile communication network, and are not a network call implemented through the Internet. Correspondingly, an electronic device without the mobile communication capability is an electronic device that cannot access a mobile communication network.

The electronic device that has the mobile communication capability and the electronic device without the mobile communication capability may be specifically a mobile phone, a tablet computer, a personal computer (personal computer, PC), a wearable device, an in-vehicle device, an augmented reality (augmented reality, AR) device/a virtual reality (virtual reality, VR) device, a notebook computer, an ultra-mobile personal computer (ultra-mobile personal computer, UMPC), a netbook, a personal digital assistant (personal digital assistant, PDA), or the like. Specific types of the electronic devices are not limited in embodiments of this application.

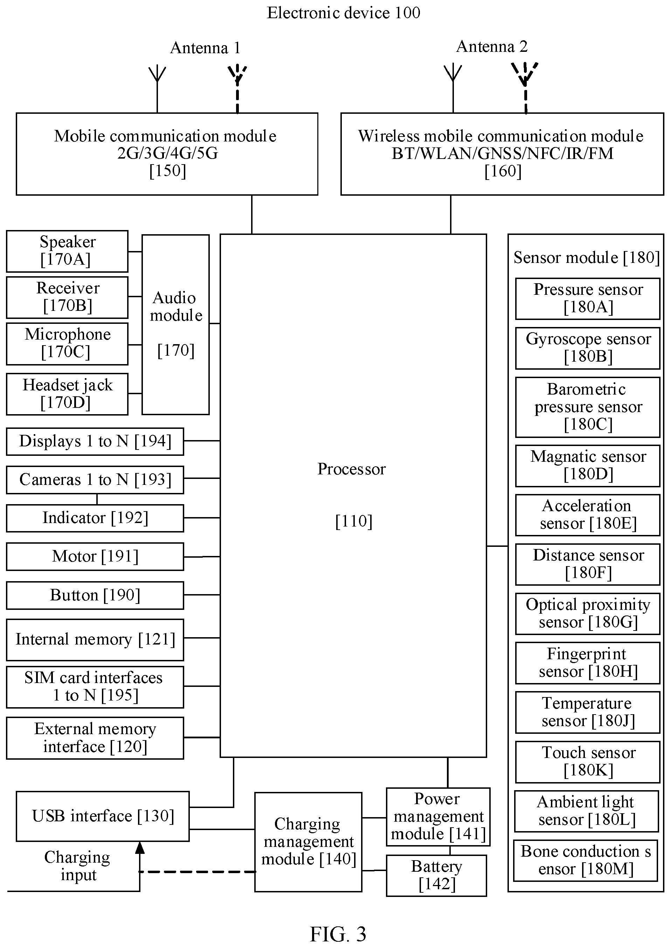

For example, the electronic device is a mobile phone. FIG. 3 is a schematic diagram of an example of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, a button 190, a motor 191, an indicator 192, a camera 193, a display 194, a SIM card interface 195, and the like. The sensor module 180 may include a pressure sensor 180A, a gyroscope sensor 180B, a barometric pressure sensor 180C, a magnetic sensor 180D, an acceleration sensor 180E, a range sensor 180F, a proximity light sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate devices, or may be integrated into one or more processors.

The controller may be a nerve center and a command center of the electronic device 100. The controller may generate an operation control signal according to instruction operation code and a time-sequence signal, and control fetching and executing of instructions.

A memory may further be disposed in the processor 110, and the memory is configured to store instructions and data. In some embodiments, the memory in processor 110 is a cache memory. The memory may store instructions or data recently used or cyclically used by the processor 110. If the processor 110 needs to use the instructions or the data again, the processor may directly invoke the instructions or the data from the memory. In this way, repeated access is avoided, and waiting time of the processor 110 is reduced, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Structures of the antenna 1 and the antenna 2 in FIG. 3 are merely an example. Each antenna of the electronic device 100 may be configured to cover one or more communication frequency bands. Different antennas may further be multiplexed to improve utilization of the antennas. For example, the antenna 1 may be multiplexed into a diversity antenna of a wireless local area network. In some other embodiments, the antennas may be used with a tuning switch.

The mobile communication module 150 may provide a solution to wireless communication such as 2G/3G/4G/5G applied to the electronic device 100. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and send the electromagnetic wave to the modem processor for demodulation. The mobile communication module 150 may further amplify a signal modulated by the modem processor, and convert the signal into an electromagnetic wave by using the antenna 1 for radiation. In some embodiments, at least some function modules of the mobile communication module 150 may be disposed in the processor 110. In some embodiments, at least some of the function modules of the mobile communication module 150 may be disposed in a same device as at least some modules of the processor 110.

The wireless communication module 160 may provide a solution to wireless communication applied to the electronic device 100, for example, a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components into which at least one communication processing module is integrated. The wireless communication module 160 receives an electromagnetic wave by using the antenna 2, performs frequency modulation on and filters the electromagnetic wave signal, and sends a processed signal to the processor 110. The wireless communication module 160 may further receive a to-be-sent signal from the processor 110, perform frequency modulation on and amplify the to-be-sent signal, and convert the to-be-sent signal into an electromagnetic wave by using the antenna 2 for radiation.

In some embodiments, the antenna 1 and the mobile communication module 150 of the electronic device 100 are coupled, and the antenna 2 and the wireless communication module 160 of the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a beidou satellite navigation system (beidou navigation satellite system, BDS), a quasi-zenith satellite system (quasi-zenith satellite system, QZSS), and/or satellite based augmentation systems (satellite based augmentation systems, SBAS).

The electronic device 100 implements a display function by using the GPU, the display 194, the application processor, and the like. The GPU is a microprocessor for image processing and connects the display 194 and the application processor. The GPU is configured to perform mathematical and geometric calculations, and is configured to render graphics. The processor 110 may include one or more GPUs that execute program instructions to generate or change display information.

The internal memory 121 may be configured to store computer executable program code, where the executable program code includes instructions. The processor 110 runs the instructions stored in the internal memory 121, to implement various function applications and data processing of the electronic device 100. The internal memory 121 may include a program storage area and a data storage area. The program storage area may store an operating system, an application required by at least one function (for example, a sound playback function and an image display function), and the like. The data storage region may store data (such as audio data and an address book) and the like created when the electronic device 100 is used. In addition, the internal memory 121 may include a high-speed random access memory, and may alternatively include a non-volatile memory, for example, at least one magnetic disk storage device, a flash memory device, or a universal flash storage (universal flash storage, UFS).

The SIM card interface 195 is configured to connect a SIM card. The SIM card may be inserted into the SIM card interface 195 or plugged from the SIM card interface 195, to come into contact with or be separated from the electronic device 100. The electronic device 100 may support one or N SIM card interfaces, where N is a positive integer greater than 1. The SIM card interface 195 can support a nano SIM card, a micro SIM card, a SIM card, and the like. A plurality of cards may be inserted into a same SIM card interface 195 at the same time. The plurality of cards may be of a same type or different types. The SIM card interface 195 may further be compatible with different types of SIM cards. The SIM card interface 195 may further be compatible with an external memory card. The electronic device 100 interacts with a network by using the SIM card, to implement functions such as a call and data communication. In some embodiments, the electronic device 100 uses an eSIM, that is, an embedded SIM card. The eSIM card may be embedded in the electronic device 100 and cannot be separated from the electronic device 100.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be divided, or different component arrangements may be used. The components in the figure may be implemented by hardware, software, or a combination of software and hardware.

It may be understood that, FIG. 3 only shows an exemplary description when the electronic device is a mobile phone. If the electronic device is another device, for example, a tablet computer, a PC, a PDA, or a wearable device, the structure of the electronic device may include fewer structure than those shown in FIG. 3 or may include more structure than those shown in FIG. 3. This is not limited herein. For example, compared with the mobile phone shown in FIG. 3, a PC or a tablet computer that does not have the mobile communication capability at least does not include the mobile communication module.

For ease of description, in the following embodiments, an electronic device that has the mobile communication capability is referred to as a second electronic device, an electronic device to which the second electronic device synchronizes an incoming call event is referred to as a first electronic device (that is, the second electronic device may synchronize the incoming call event to the first electronic device, and a user can answer an incoming call by using the first electronic device), and the first electronic device may have the mobile communication capability, or may not have the mobile communication capability. A quantity of the second electronic devices may be one or more, and a quantity of the first electronic device may also be one or more. It can be learned from the foregoing that the reason why the first electronic device that does not have the mobile communication capability can be endowed with a call capability is that the first electronic device establishes a trust relationship with the second electronic device. Therefore, the following first describes a process in which the first electronic device establishes the trust relationship with the second electronic device.

In a feasible implementation, when a same user account is logged in on the first electronic device and the second electronic device, it may be considered that the trust relationship is established between the first electronic device and the second electronic device. For example, two mobile phones of a same user, or a mobile phone, a tablet computer, and a notebook computer of a same user may be connected by logging in to a user account of the user.

In another feasible implementation, near field connection may be performed between the first electronic device and the second electronic device to establish the trust relationship. For example, the near filed connection may be that the electronic devices are connected in a same local area network, where the same local area network may be a same WLAN, or may be in a same wired local area network, or may be a local area network formed through combining wired connection and wireless connection. This is not limited herein. For another example, the near field connection may be that the electronic devices are connected by using a short-range communication technology, for example, are connected by using a short-range communication technology like Bluetooth and Wi-Fi. This is not limited herein.

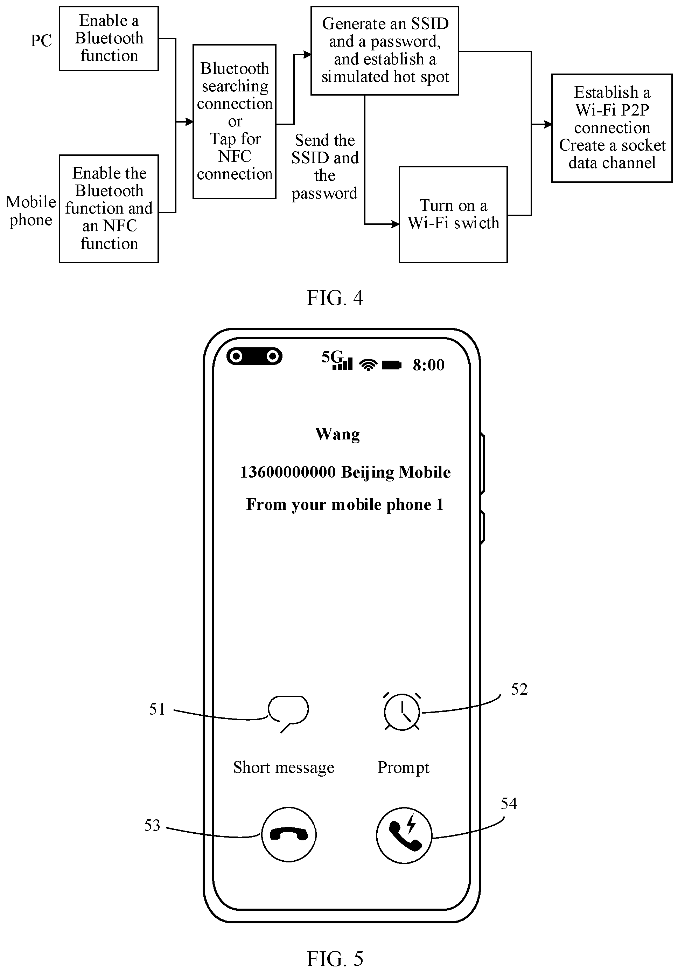

Optionally, the trust relationship established between the first electronic device and the second electronic device may combine the foregoing two examples. For example, as shown in FIG. 4, assuming that the first electronic device is a PC, and the second electronic device is a mobile phone, the user may enable a Bluetooth function and an NFC function of the mobile phone, and enable a Bluetooth function of the PC. In a Bluetooth device searching interface of the mobile phone, device information of the PC may be searched and displayed. When the user selects the PC in the interface, a Bluetooth connection between the mobile phone and the PC may be established. Alternatively, in a computer manager application interface of the PC, the device information of the PC may be searched and displayed. When the user selects the PC in the interface, a Bluetooth connection between the mobile phone and the PC may be established. Alternatively, the user may put the mobile phone close to a radio frequency tag area of the PC and perform tap to transfer, so that a device of an opposite party can be identified by using the NFC function. In this way, an NFC connection is established between the mobile phone and the PC. Then, the PC may generate a service set identifier (service set identifier, SSID) and a password, and establish a soft acce point (soft acce point, SoftAP) by using a Wi-Fi chip of the PC based on the SSID and the password. Then, the PC may send the SSID and the password to the mobile phone through a channel corresponding to the Bluetooth connection or the NFC connection, to enable the mobile phone (in this case, the mobile phone needs to turn on a Wi-Fi switch again) to invoke a Wi-Fi chip of the mobile phone to establish a Wi-Fi P2P connection with the PC based on the received SSID and the password, and create a socket data channel for subsequent data transmission between the PC and the mobile phone. In this way, the trust relationship between the mobile phone and the PC is established. For a process in which a trust relationship is established between electronic devices like a mobile phone and a mobile phone, a mobile phone and a tablet computer, and a tablet computer and a PC, refer to the foregoing descriptions, and details are not described herein again.

The first electronic device and the second electronic device between which the trust relationship is established can form a trust chain. Electronic devices in the trust chain may perform data synchronization, where data synchronization includes but is not limited to synchronization of an incoming call alarm, synchronization of a call record, and the like. The following describes in detail a process of an incoming call display method provided in an embodiment of this application based on the first electronic device and the second electronic device between which the trust relationship is established.

### Scenario 1

When the second electronic device receives an incoming call of a user of an opposite party, the second electronic device may synchronize an incoming call event to the first electronic device. The synchronized incoming call event includes information such an incoming call user name, an incoming call number, a number registration location, and an operator, and further includes a device name and a type of the second electronic device. After receiving the incoming call event synchronized by the second electronic device, the first electronic device may display the information included in the incoming call event in a current interface.

For example, the first electronic device is a mobile phone 1, and the second electronic device is a mobile phone 2. When the mobile phone 1 receives an incoming call, the mobile phone 1 may synchronize an incoming call event to the mobile phone 2, and the mobile phone 2 displays information included in the incoming call event in a current interface. FIG. 5 is a schematic diagram of an incoming call interface displayed on a mobile phone according to an embodiment. It can be learned from FIG. 5 that the incoming call is from a Beijing Mobile number 13600000000 of Wang. In addition, information "From your mobile phone 1" is further displayed on the incoming call interface of the mobile phone 2, where the mobile phone 1 is a name and a type of a called mobile phone. The mobile phone 2 may also be an electronic device that has a communication capability. Therefore, displaying the device information of the mobile phone 1 can enable the user to immediately know that the incoming call is synchronized by another device instead of an incoming call to the mobile phone 2. It may be understood that if the mobile phone 2 receives an incoming call, no device information needs to be displayed. It may be further understood that because the mobile phone 1 and the mobile phone 2 are electronic devices of a same type, the mobile phone 2 can display the incoming call interface in a full-screen manner like the mobile phone 1.

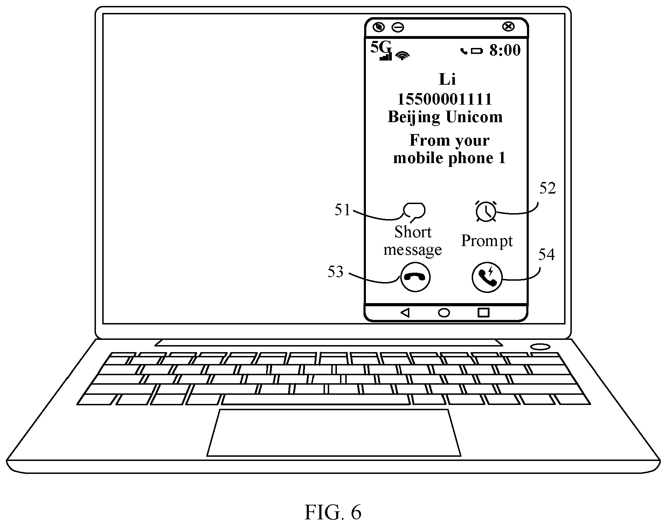

For another example, the second electronic device is a mobile phone 1, and the second electronic device is a PC. When the mobile phone 1 receives an incoming call, the mobile phone 1 may synchronize an incoming call event to the PC, and the PC displays information included in the incoming call event in a current interface. FIG. 6 is a schematic diagram of an incoming call interface displayed on a PC according to an embodiment. It can be learned from FIG. 6 that the incoming call is from a Beijing Unicom number 15500001111 of Li. In addition, information "From your mobile phone 1" is further displayed on the incoming call interface of the PC, where the mobile phone 1 is a name and a type of a called mobile phone. The user can immediately learn from the information that the incoming call event is synchronized by the mobile phone 1. It may be understood that because the PC and the mobile phone are electronic devices of different types, the PC may display the incoming call interface in a full-screen manner, or may display the incoming call interface in a partial area of a display of the PC. FIG. 6 shows, by showing a virtual mobile phone interface as an example, that another area in the display of the PC can normally display an interface of another application running on the PC. For an electronic device of another type, for example, a tablet computer, the electronic device may display the foregoing incoming call event in a same display manner as the PC. Details are not described herein again.

In the scenario, if a plurality of SIM cards are inserted in the second electronic device, in addition to the information shown in FIG. 5, the incoming call event synchronized by the second electronic device to the first electronic device further includes information of a currently called SIM card. For example, a SIM card 1 and a SIM card 2 are inserted in the second electronic device. The user of the opposite party currently calls a number corresponding to the SIM card 1. In this case, the second electronic device may synchronize information of the SIM card 1 to the first electronic device, where the synchronized information of the SIM card includes but is not limited to a card number, an operator to which the card number belongs, and the like.

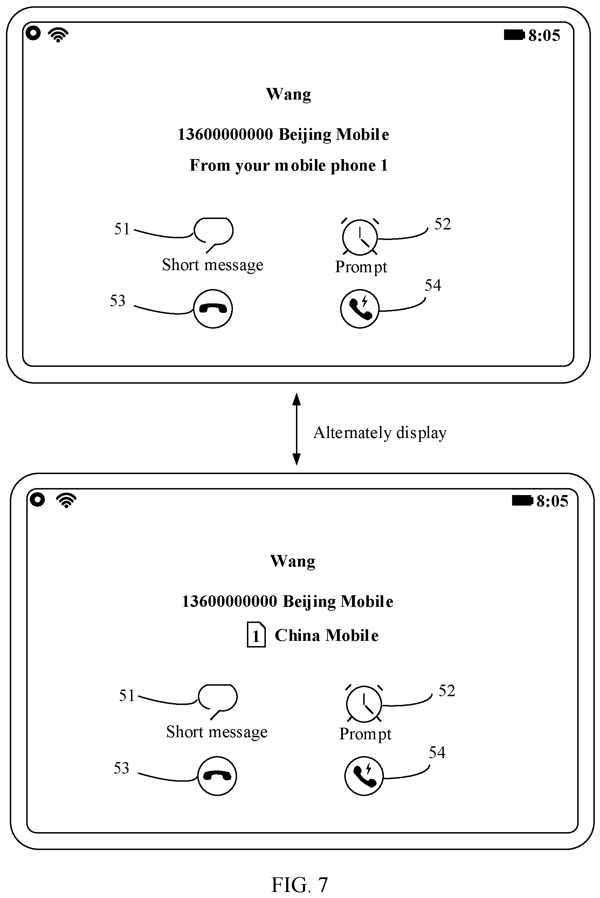

For example, the first electronic device is a mobile phone 1, and the second electronic device is a tablet computer. When the mobile phone 1 receives an incoming call, the mobile phone 1 may synchronize an incoming call event to the tablet computer, and the tablet computer displays information included in the incoming call event in a current interface. FIG. 7 is a schematic diagram of an incoming call interface displayed on a tablet computer according to an embodiment. It can be learned from FIG. 7 that the incoming call is from a Beijing Mobile number 13600000000 of Wang. In addition, information "From your mobile phone 1" and information of a SIM card 1 are further displayed on the incoming call interface of the tablet computer, where the mobile phone 1 is a name and a type of a called mobile phone, and the information of the SIM card 1 is information of an operator to which the called number belongs. The user can immediately learn from the information that the incoming call event is an incoming call event of the SIM card 1 that is synchronized by the mobile phone 1. Optionally, the information "From your mobile phone 1" and the information of the SIM card 1 shown in FIG. 7 may be alternately displayed. That is, the information "From your mobile phone 1" is currently displayed, and the information of the SIM card 1 is displayed in a next second, and then the information "From your mobile phone 1" is displayed in a next second. The information "From your mobile phone 1" and the information of the SIM card 1 are alternately displayed.

From the interfaces shown in FIG. 5 to FIG. 7, it can be learned that in addition to the information of the incoming call event, some incoming call controls are further displayed on the first electronic device, for example, a short message control 51, a reminder control 52, a rejecting control 53, and an answering control 54. The short message control 51 is used to send a short message to the user of the opposite party when the user currently does not answer the incoming call. For example, a short message "I am busy, and cannot answer the call" or the like may be sent. The reminder control 52 is used to set to remind the user of calling back later when the user currently does not answer the incoming call. For example, a reminder after 30 minutes that reminds of calling back is set. The rejecting control 53 is used to directly reject the incoming call when the user currently does not answer the incoming call. In this case, no short message is sent to the user of the opposite party, and the user is not reminded of calling back. The answering control 54 is used for the user to answer a current incoming call. Usually, after the user taps the short message control 51 or the reminder control 52, it means that the user rejects the incoming call. In this embodiment of this application, to distinguish between a super call function on the first electronic device and a normal call function on the second electronic device, in the incoming call display interface of the first electronic device, a super call identifier may be added to the answering control 54, for example, a flash symbol on the answering control 54 shown in FIG. 5 to FIG. 7.

In this scenario, the second electronic device synchronizes the incoming call event that includes the device name and the type to the first electronic device, so that the electronic device can display device information of the second electronic device that synchronizes the incoming call. In this way, the user can immediately learn which electronic device is called, which is convenient for the user to determine whether to answer the call, thereby improving user use experience.

### Scenario 2

When the second electronic device receives an incoming call of a user of an opposite party, the second electronic device may synchronize an incoming call event to the first electronic device. The synchronized incoming call event includes information such an incoming call user name, an incoming call number, a number registration location, and an operator, and further includes a device name and a type of the second electronic device. When the electronic device currently displays an interface of another application, for example, the user uses the first electronic device to do office work of watch a video, if the first electronic device displays the synchronized incoming call event in a full-screen manner, running of the another application may be affected. Therefore, to avoid affecting a current use state of the user, after receiving the incoming call event synchronized by the second electronic device, the first electronic device may display the information included in the incoming call event above a current interface.

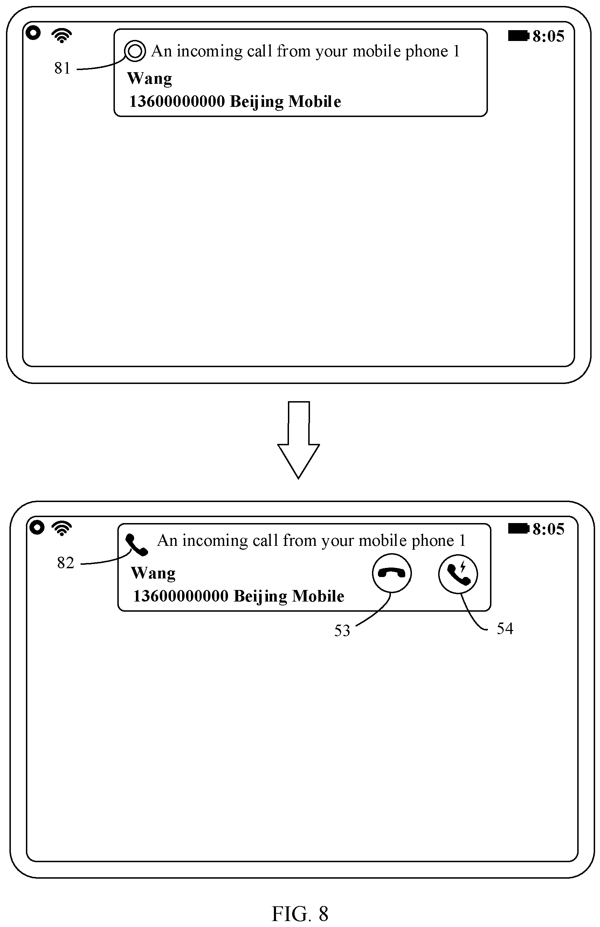

In a feasible implementation, when displaying the information of the incoming call event, the first electronic device may first display a super call identification icon, and then switch to an incoming call icon. For example, the first electronic device is a mobile phone 1, and the second electronic device is a tablet computer. When the mobile phone 1 receives an incoming call, the mobile phone 1 may synchronize the incoming call event to the tablet computer, and the tablet computer displays information included in the incoming call event above a current interface. FIG. 8 is a schematic diagram of an incoming call interface displayed on a tablet computer according to another embodiment. It can be learned from FIG. 8 that the incoming call is from a Beijing Mobile number 13600000000 of Wang, and a super call identification icon 81 is first displayed on the incoming call display interface of the tablet computer, and information "An incoming call from your mobile phone 1" is displayed behind the identification icon 81, where the mobile phone 1 is a name and a type of a called mobile phone. After the interface stays for a period of time (for example, 1 or 2 seconds), an interface including an incoming call icon 82 may be switched to, and the information "An incoming call from your mobile phone 1" is also displayed on the interface.

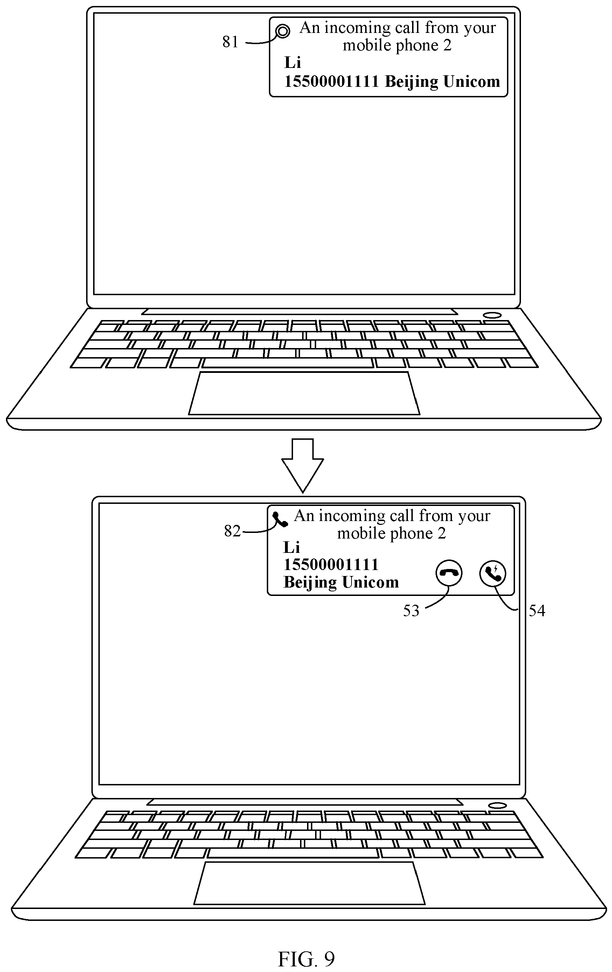

For another example, the second electronic device is a mobile phone 2, and the first electronic device is a PC. When the mobile phone 2 receives an incoming call, the mobile phone 2 may synchronize the incoming call event to the PC, and the PC displays information included in the incoming call event above a current interface. FIG. 9 is a schematic diagram of an incoming call interface displayed on a PC according to another embodiment. It can be learned from FIG. 9 that the incoming call is from a Beijing Unicom number 15500001111 of Li. In addition, a super call identification icon 81 is first displayed on the incoming call display interface of the PC, and information "An incoming call from your mobile phone 2" is displayed behind the identification icon 81, where the mobile phone 2 is a name and a type of a called mobile phone. After the interface stays for a period of time (for example, 1 or 2 seconds), an interface including a normal incoming call icon 82 may be switched to, and the information "An incoming call from your mobile phone 2" is also displayed on the interface.

Optionally, considering a size of a notification bar, when displaying the information of the incoming call event, the first electronic device may only display the incoming call user name and the device name and the type of the second electronic device, and does not display information such as the phone number and the registration location shown in FIG. 8 or FIG. 9. If the user of the opposite party is an unknown user, only the incoming call number and the device name and the type of the second electronic device may be displayed.

In the scenario, if a plurality of SIM cards are inserted in the second electronic device, in addition to the foregoing information, the incoming call event synchronized by the second electronic device to the first electronic device may further include information of a currently called SIM card. For example, a SIM card 1 and a SIM card 2 are inserted in the second electronic device. If a number corresponding to the SIM card 2 is currently called by the user of the opposite party, the second electronic device may synchronize information of the SIM card 2 to the first electronic device, where the synchronized information of the SIM card includes but is not limited to a card number, an operator to which the card number belongs, and the like.

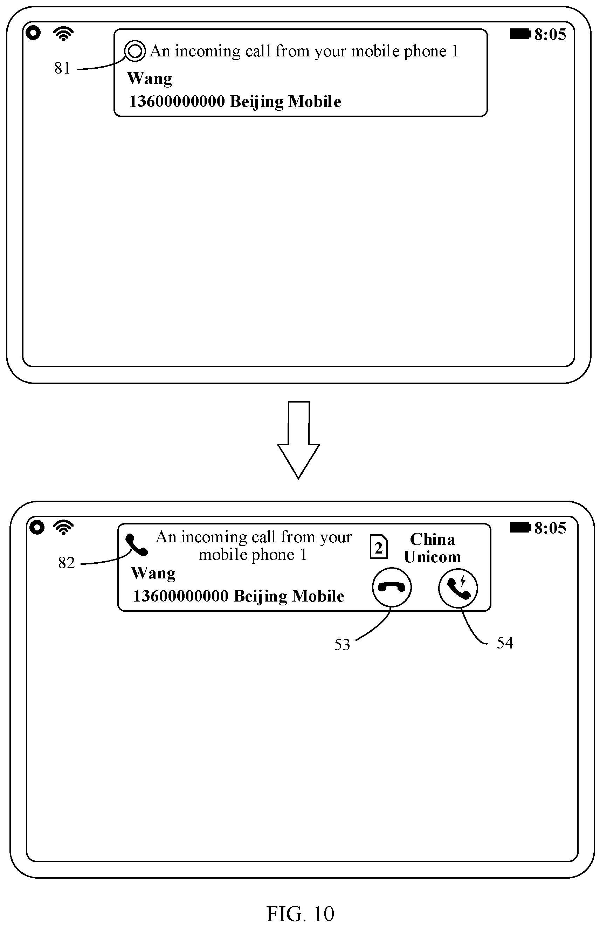

For example, the second electronic device is a mobile phone 1, and the first electronic device is a tablet computer. When the mobile phone 1 receives an incoming call, the mobile phone 1 may synchronize the incoming call event to the tablet computer, and the tablet computer displays information included in the incoming call event above a current interface. FIG. 10 is a schematic diagram of an incoming call interface displayed on a tablet computer according to still another embodiment. It can be learned from FIG. 10 that information "From your mobile phone 1" and the information of the SIM card 2 are further displayed on the incoming call display interface, where the mobile phone 1 is a name and a type of a called mobile phone, and the information of the SIM card 2 is information of an operator to which a called number belongs. Optionally, the information "From your mobile phone 1" and the information of the SIM card 2 in FIG. 10 may be alternately displayed, or the information of the SIM card 2 may be displayed behind the information "From your mobile phone 1". A case in which the information of the SIM card 2 is displayed behind the information "From your mobile phone 1" is shown in FIG. 10 as an example.

From the interfaces shown in FIG. 8 to FIG. 10, it can be learned that in addition to the information of the incoming call event, some incoming call controls are further displayed on the first electronic device, for example, a rejecting control 53 and an answering control 54. In this embodiment of this application, to distinguish between a super call function on the first electronic device and a normal call function on the second electronic device, in the incoming call display interface of the first electronic device, a super call identifier may be added to the answering control 54, for example, a flash symbol on the answering control 54 shown in FIG. 8 to FIG. 10.

In this scenario, the second electronic device synchronizes the incoming call event that includes the device name and the type to the first electronic device, so that the electronic device can display device information of the second electronic device that synchronizes the incoming call. In this way, the user can immediately learn which electronic device is called, which is convenient for the user to determine whether to answer the call, thereby improving user use experience.

### Scenario 3

When the user answers the incoming call on the first electronic device, for example, taps the answering control 54 shown in FIG. 5 to FIG. 10, a call state is entered. In a call interface of the first electronic device, the device name and type information of the second electronic device may still be displayed, where the device name and the type information of the second electronic device are the information included in the synchronized incoming call event.

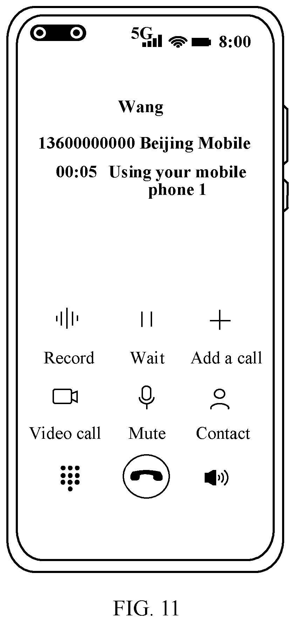

For example, the second electronic device is a mobile phone 1, and the first electronic device is a mobile phone 2. After the mobile phone 2 answers an incoming call synchronized by the mobile phone 1, the mobile phone 2 may display information included in the incoming call event and current call duration in a current interface. FIG. 11 is a schematic diagram of a call interface displayed on a mobile phone according to an embodiment. It can be learned from FIG. 11 that the user is currently performing a call with a Beijing Mobile number 13600000000 of Wang, and current call duration is 5 seconds. In addition, information "Using your mobile phone 1" is further displayed on a call interface of the mobile phone 2, where the mobile phone 1 is a name and a type of a called mobile phone. In this way, the user can check which mobile phone is called at any time in a call process. In addition, the call interface further includes some call controls such as a recording control, a waiting control, a call adding control, a video call control, a mute control, a contact control, a number keyboard control, a speaker control, and a hang-up control. Functions of these controls are the same as functions used when a mobile phone (namely, a device that has a mobile communication capability) is used to answer a call. Details are not described herein again.

In the scenario, if a plurality of SIM cards are inserted in the second electronic device, and a number corresponding to a SIM card 2 is currently used for the call with the user of the opposite party, information of the SIM card 2 may be further displayed on the call interface of the first electronic device.

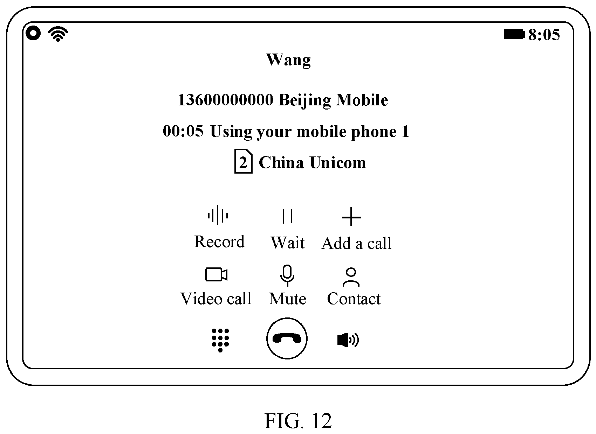

For example, the second electronic device is a mobile phone 1, and the first electronic device is a tablet computer. As shown in FIG. 12, after the tablet computer answers an incoming call synchronized by the mobile phone 1, information "Using your mobile phone 1" and the information of the SIM card 2 are displayed on a call interface of the tablet computer, where the mobile phone 1 is a name and a type of a called mobile phone, and the information of the SIM card 2 is information of an operator to which a called number belongs. Optionally, the information "Using your mobile phone 1" and the information of the SIM card 2 in FIG. 12 may be alternately displayed, or the information of the SIM card 2 may be displayed below the information "Using your mobile phone 1". A case in which the information of the SIM card 2 is displayed below the information "Using your mobile phone 1" is shown in FIG. 12 as an example.

In the scenario, after the first electronic device answers the incoming call, the first electronic device may display information such as the device name and the type of the second electronic device in the call interface, so that the user can check which mobile phone is called at any time in a call process, thereby improving user use experience.

### Scenario 4

In a process in which the user is performing a call with one user of an opposite party, a case in which another opposite party also calls the user may occur. In this case, the user may hold a current call, and prioritize answering an incoming call of another opposite party. This function is usually referred to as call on-hold. In this embodiment of this application, when the user uses the first electronic device to answer an incoming call synchronized by the second electronic device (in this case, the first electronic device displays the call interface shown in the scenario 3 described above), if the second electronic device receives a new incoming call, the second electronic device may also synchronize an incoming call event of the new incoming call to the first electronic device, where the synchronized incoming call event also includes the device name and the type of the second electronic device. In this case, the incoming call information of the current call and the incoming call information of the new incoming call may be displayed on the interface of the first electronic device.

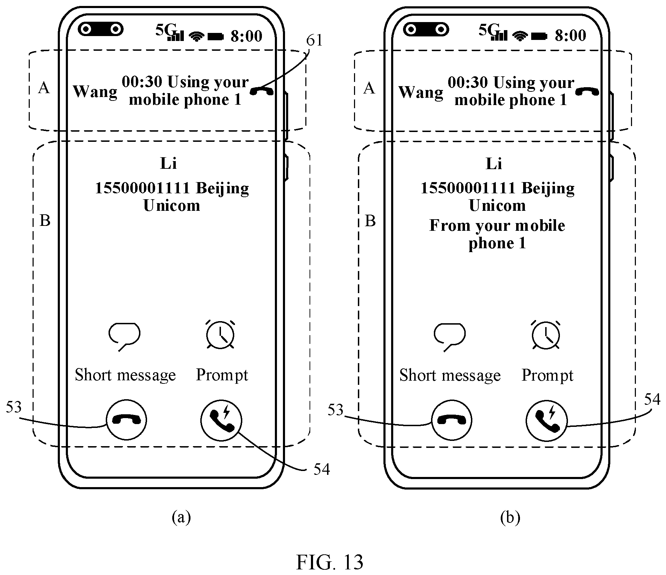

For example, the second electronic device is a mobile phone 1, and the first electronic device is a mobile phone 2. The user is answering an incoming call 1 synchronized by the mobile phone 1 by using the mobile phone 2, and the mobile phone 1 further synchronize an incoming call 2 to the mobile phone 2. In this case, the mobile phone 2 may simultaneously display information of the incoming call 1 and information of the incoming call 2 in a current interface. FIG. 13 is a schematic diagram of an incoming call interface displayed on a mobile phone according to an embodiment. It can be learned from (a) in FIG. 13 that information displayed in an area A is the information of the incoming call 1, that is, the user is performing a call with Wang, call duration is 30 seconds, and information "Using your mobile phone 1" is displayed, where the mobile phone 1 is a name and a type of a called mobile phone. Information displayed in an area B is the information of the incoming call 2, that is, an incoming call is sent from a Beijing Unicom number 15500001111 of Li. In (a) in FIG. 13, because the incoming call 1 and the incoming call 2 are both synchronized by the mobile phone 1, the name and the type of the mobile phone 1 are not displayed in the information of the incoming call 2. However, in this embodiment of this application, the name and the type may alternatively be displayed in the information of the incoming call 2. For example, as shown in (b) in FIG. 13, information "From your mobile phone 1" is displayed. It may be understood that in this embodiment of this application, incoming call information of a currently performed call may alternatively be displayed in the area B, and incoming call information of the new incoming call may be displayed in the area A. That is, the information of the incoming call 2 is displayed in the area A, and the information of the incoming call 1 is displayed in the area B. This is not limited in this embodiment of this application. It may be further understood that if a user of an opposite party corresponding to the incoming call 1 in the area A is an unknown user, a phone number of the user may be further displayed, that is, the calling number of the incoming call 1 is displayed at a location of a name "Wang".

Optionally, in FIG. 13, a hang-up control 61 is further provided in the area A. If the user does not need to perform the incoming call 1, the user may choose to tap the hang-up control 61 to end the incoming call 1. The area B includes a rejecting control 53 and an answering control 54. A super call identifier may be added to the answering control 54, for example, a flash symbol in the figure.

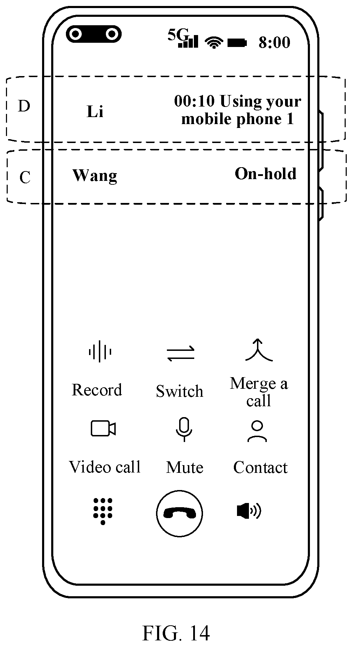

Then, if the user answers the incoming call 2 by using the mobile phone 2, the incoming call 1 is held on. In this case, for a display interface of the mobile phone 2, refer to FIG. 14. It can be learned from FIG. 14 that information displayed in an area C is the information of the incoming call 1 that is held on, that is, the call with Wang is to be held on, where "on-hold" may be included in the information. Information displayed in an area D is the information of the incoming call 2, that is, the user is performing a call with Li, call duration is 10 seconds, and information "Using your mobile phone 1" is displayed, where the mobile phone 1 is the name and the type of the called mobile phone. In addition, the interface shown in FIG. 14 further includes a recording control, a switching control, a call merging control, a video call control, a recording control, a contact control, a number keyboard control, a speaker control, and a hang-up control. Functions of these controls are the same as functions used when a mobile phone (namely, a device that has a mobile communication capability) is used for call on-hold. Details are not described herein again. It may be understood that in this embodiment of this application, the information of the incoming call 2 may alternatively be displayed in the area C, and the information of the incoming call 1 that is held on may be displayed in the area D. This is not limited in this embodiment of this application. It may be further understood that if a user of an opposite party corresponding to the incoming call 1 or the incoming call 2 is an unknown user, a phone number of the user may be displayed, that is, the calling number of the incoming call 1 is displayed at a location of a name "Wang", or a calling number of the incoming call 2 is displayed at a location of a name "Li".

In the scenario, after the first electronic device answers an incoming call, if the second electronic device further synchronizes a new incoming call, the first electronic device may simultaneously display information of a plurality of incoming calls in the incoming call interface, and display the device information of the second electronic device. In this way, the user can check which call is currently performed at any time in a call process, and which device synchronizes the call. This improves user use experience.

### Scenario 5

The foregoing scenarios describe related scenarios in which the first electronic device answers a call. In addition, a first electronic device without a mobile communication capability may further make a call by using a mobile communication capability of a second electronic device. Usually, a manner of making a call includes calling by using a dialing keyboard, making a call by using a contact, making a call by using a call record, and the like. In this case, to make a call by using the first electronic device, the second electronic device needs to synchronize information such as a dialing keyboard, a contact, and a call record to the first electronic device. After receiving the information such as the dialing keyboard, the contact, and the call record synchronized by the second electronic device, the first electronic device may choose any one of the manners to make a call.

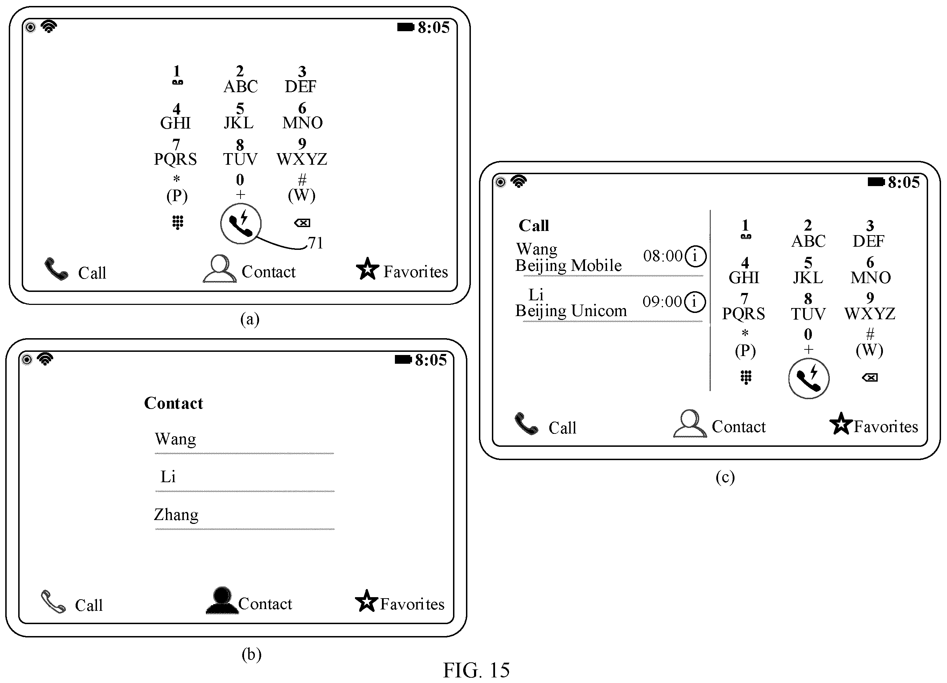

For example, the second electronic device is a mobile phone 1, and the first electronic device is a tablet computer. Refer to (a) in FIG. 15. If a manner of making a call by using a dialing keyboard is used, a dialing keyboard synchronized by the mobile phone 1 is displayed on the tablet computer. A user may enter a phone number that is to be called, and then tap a dialing control 71. Optionally, a super call identifier may be displayed on the dialing control 71, for example, a flash symbol in the figure.

For a manner of making a call by using a contact, refer to (b) in FIG. 15. The tablet computer displays a contact list synchronized by the mobile phone 1, and the user can select a to-be-called contact in the contact list.

For a manner of making a call by using a call record, refer to (c) in FIG. 15. The tablet computer displays a call record synchronized by the mobile phone 1, and the user can select a number to call back in the call record.

When synchronizing the information such as the dialing keyboard, the contact, and the call record, the second electronic device may further synchronize device information (for example, a device name and a type) of the second electronic device to the first electronic device. In this way, when the first electronic device makes a call, the first electronic device may further display the device information of the second electronic device in a dialing interface. It may be understood that because the first electronic device does not have the mobile communication capability, when receiving a call making operation of the user, the first electronic device may send the call making event to the second electronic device, and use the mobile communication capability of the second electronic device to make a call.

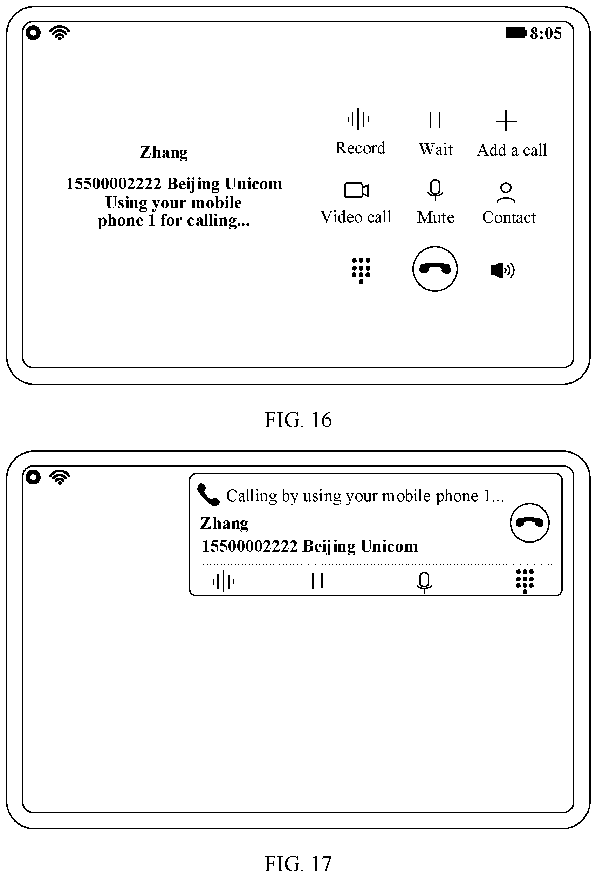

For example, it is assumed that the first electronic device is a tablet computer, and the user has performed a call making operation on the tablet computer. FIG. 16 is a schematic diagram of a call making interface on a tablet computer according to an embodiment. It can be learned from FIG. 16 that the user is using the tablet computer to make a call to a Beijing Unicom number 15500002222 of Zhang, and information "Using your mobile phone 1 to make a call" is displayed on the call making interface, that is, the mobile phone 1 is a device name and a type of a device that actually makes the call. In this way, when making a call, the user can learn which mobile phone is actually used to make the call. In addition, the call making interface shown in FIG. 16 further includes a recording control, a waiting control, a call adding control, a video call control, a mute control, a contact control, a dialing keyboard control, a speaker control, and a hang-up control.

It may be understood that FIG. 16 is a schematic diagram in which the tablet computer displays the call making interface in a full-screen manner. However, in this embodiment of this application, the call making interface may alternatively be displayed in a partial area. For example, as shown in FIG. 17, the tablet computer may display the call making interface at upper right of a display in a small window form. Certainly, the call making interface may alternatively be displayed at positions such as upper left, lower right, lower left of the display. This is not limited in this embodiment of this application. It can be learned from FIG. 17 that in addition to information such as a user name and a phone number of the call, information "Calling, using your mobile phone 1" is further displayed on the display interface of call making, that is, the mobile phone 1 is the name and the type of the device that actually makes the call. In addition, the call making interface shown in FIG. 17 may further include some space. However, limited by a size of the small window, only the recording control, the waiting control, the mute control, the dialing keyboard control, and the hang-up control may be displayed.

In an embodiment, for the manner of making a call by using a call record, the first electronic device may receive a call record synchronized by the second electronic device. In addition, after the first electronic device answer a call in the manner of the third scenario described above, the first electronic device may further generate a call record based on an answering time. For the call record generated by the first electronic device, the call record belongs to a super call, and it can be learned from the descriptions in the foregoing embodiment that when answering a call, the first electronic device may display the device name and the type of the used second electronic device. Therefore, the device name and the type of the second electronic device may be further displayed in the call record. Further, when a plurality of SIM card are inserted in the second electronic device, SIM card information of the second electronic device may be further displayed in a call record interface of the first electronic device. It may be understood that call records of all electronic devices in a trust chain may be synchronized for each other. For example, after one electronic device answers a call, all of the rest electronic devices may record that the call is answered. After one electronic device rejects a call, all of the rest electronic devices may record that the call is rejected. When all of the electronic devices do not answer a call, all of the electronic device may record that the call is not answered.

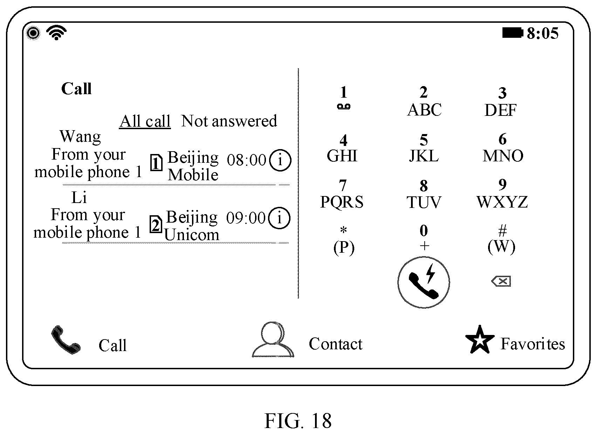

For example, the second electronic device is a mobile phone 1, and the first electronic device is a tablet computer. The mobile phone 1 synchronizes a call record to the tablet computer, and the tablet computer generates a call record of the tablet computer. For a call record interface displayed on the tablet computer, refer to FIG. 18. It can be learned from FIG. 18 that a first call record is a call record with Wang, and information "From your mobile phone 1" and information of a SIM card 1 are displayed in the call record. A second call record is a call record with Li, and information "From your mobile phone 1" and information of a SIM card 2 are displayed in the call record. It can be learned from the two records that the two records are both about answering an incoming call synchronized by the mobile phone 1, and in the first call record, the SIM card 1 in the mobile phone 1 is actually called, and in the second call record, the SIM card 2 in the mobile phone 1 is actually called. Displaying device information of the mobile phone 1 enables the user to know an incoming call for which mobile phone is answered on the tablet computer.

In the example, the tablet computer may display the call record at a left side of a display, and display a dialing keyboard at a right side, so that the user can quickly dial a number when the user needs to make a call by using the dialing keyboard. Optionally, a super call identifier may be displayed on the dialing control 71 in the dialing keyboard, for example, a flash symbol in the figure.

In the scenario, when the first electronic device makes a call by using the call capability of the second electronic device, the first electronic device may display the device information of the second electronic device, so that when making a call, the user can check which device is currently performing calling at any time. This improves user use experience.

The foregoing five scenarios are scenarios to which the incoming call display method provided in embodiments of this application is applicable. However, the incoming call display method is not limited to the foregoing five scenarios. In an interface related to an incoming call, if it is needed, the first electronic device may display the device information of the second electronic device for the user to check. To support implementation of the foregoing scenarios, in this embodiment of this application, an architecture of a software system of the electronic device 100 is further provided. The software system of the electronic device 100 may use a layered architecture, an event-driven architecture, a micro core architecture, a micro service architecture, or a cloud architecture. In this embodiment of this application, the software structure of the electronic device 100 is illustrated by using an Android system with a layered architecture as an example.

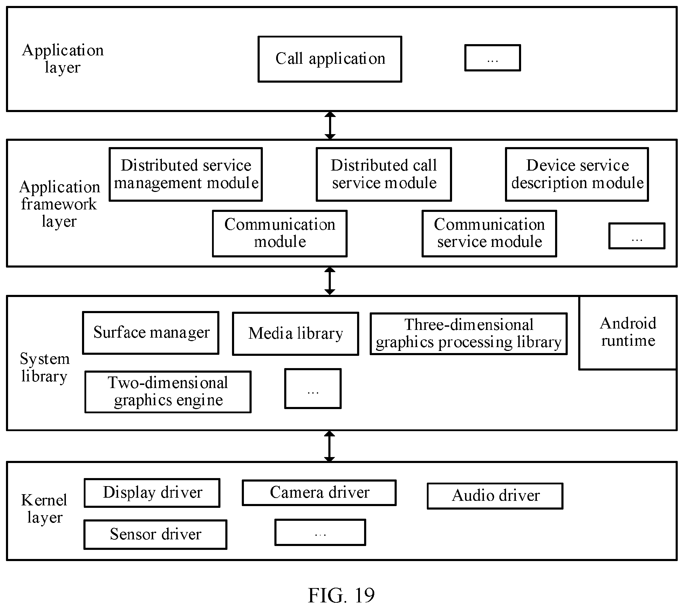

FIG. 19 is a block diagram of the software structure of the electronic device 100 in this embodiment of this application. In the layered architecture, software is divided into several layers, and each layer has a clear role and task. The layers communicate with each other through a software interface. In some embodiments, the Android system is divided into four layers, which are an application layer, an application framework layer, an Android runtime (Android runtime) and system library, and a kernel layer from top to bottom. The application layer may include a series of application packages.

The application packages may include applications such as camera, gallery, calendar, call, maps, navigation, WLAN, Bluetooth, music, videos, and short messages. FIG. 19 shows an example of the call application.

The application framework layer provides an application programming interface (application programming interface, API) and a programming framework for applications at the application layer. The application framework layer includes some predefined functions.

As shown in FIG. 19, the application framework layer may include a distributed service management module, a distributed call service module, a device service description module, a telecom (telecom) module, and the like. When the electronic device has a mobile communication capability, the electronic device may further include a teleService (teleService) module, and the like.

The distributed service management module can provide a distributed connection capability of the electronic device, that is, two or more electronic devices may establish a trust connection by using a distributed service management module of each other, and a trust chain is formed after the trust connection is established. The distributed call service module can provide a distributed call function, that is, between two or more electronic devices between which a trust connection is established, through mutual interaction by using the distributed call service module, call information may be synchronized, or a function of invoking a call function of each other may be implemented. For example, the forgoing second electronic device may synchronize an incoming call event to the first electronic device, or the first electronic device makes a call by using a call capability of the second electronic device. The device service description module may perform registration and maintenance of mobile communication capability information of the electronic device.

The communication module may provide a communication function for the electronic device, that is, the electronic device may invoke a mobile communication capability or invoke a communication interface by using the communication module. For example, the communication module can answer a call, hang up a call, or the like by invoking a capability of a related module in the Android system. In addition, the communication module may further start an interface during an incoming call by invoking a related module, for example, a drawing and rendering module, a display processing module (not shown in the figure), and the like. The communication module may be used to invoke a module related to the mobile communication capability to implement the mobile communication capability.

In addition, in some embodiments that are not shown, the application framework layer may further include a window manager device, a content provider, a view system, a phone manager, a resource manager, a notification manager, and the like. The window manager is configured to manage a window application. The window manager may obtain a size of a display, determine whether there is a status bar, perform screen locking, take a screenshot of the screen, and the like. The content provider is configured to store and obtain data and make the data accessible to an application. The data may include a video, an image, audio, made and answered calls, a browse history, a bookmark, an address book, and the like. The resource manager provides various resources such as a localized character string, an icon, an image, a layout file, and a video file for an application. The view system includes visual controls such as a control for displaying a text and a control for display an image. The view system may be configured to construct an application. A display interface may include one or more views. For example, an incoming call notification interface may be included, and may include a view for displaying a text and a view for displaying an image. The notification manager enables an application to display, in the status bar, notification information that may be used to convey a message of a notification type, where the message may disappear automatically after a short stay without user interaction. For example, the notification manager is configured to provide a notification of download completion and a message notification. The notification manager may alternatively be a notification that appears on a top status bar of the system in a form of a graph or a scroll bar text, for example, a notification of an application running on a background, or may be a notification that appears on the display in a form of a dialog window. For example, text information is prompted in the status bar, a prompt tone is made, the electronic device vibrates, or an indicator light flash.

The Android runtime includes a core library and a virtual machine. The Android runtime is responsible for scheduling and managing the Android system.

The core library includes two parts. One part is a performance function that the Java language needs to invoke, and the other part is a core library of Android.

The application layer and the application framework layer are run in the virtual machine. The virtual machine executes Java files of the application layer and the application framework layer as binary files. The virtual machine is used to execute functions such as object lifecycle management, stack management, thread management, security and exception management, and garbage collection. The system library may include a plurality of function modules, a surface manager (surface manager), a media library (media library), a three-dimensional graphics processing library (for example, OpenGL ES), and a 2D graphics engine (for example, SGL). The surface manager is configured to manage a display subsystem, and provide fusion of 2D and 3D layers to a plurality of applications. The media library supports playback and recording in a plurality of common audio and video formats, and further supports a static image file, and the like. The media library may support a plurality of audio and video encoding formats, such as MPEG4, H.264, MP3, AAC, AMR, JPG, and PNG. The three-dimensional graphics processing library is configured to implement three-dimensional graphics drawing, image rendering, composition, layer processing, and the like. The 2D graphics engine is a drawing engine for 2D drawing.

The kernel layer is a layer between hardware and software. System security, memory management, process management, a network protocol stack, a driving model, and the like all depend on the kernel layer. The kernel layer includes at least a display driver, a camera driver, an audio driver, a sensor driver, and the like.

It should be noted that for software structures of the first electronic device and the second electronic device, refer to FIG. 19. However, if the first electronic device is a device that does not have a mobile communication capability, the first electronic device may not include a communication service module and the like. This embodiment of this application does not limit the structures of the first electronic device and the second electronic device.

For ease of understanding of implementation processes of the foregoing five scenarios, in the following embodiments of this application, for example, the terminal device having the structures in FIG. 19 is used in combination with the accompanying drawings and application scenarios to specifically illustrate the incoming call display method provided in embodiments of this application.

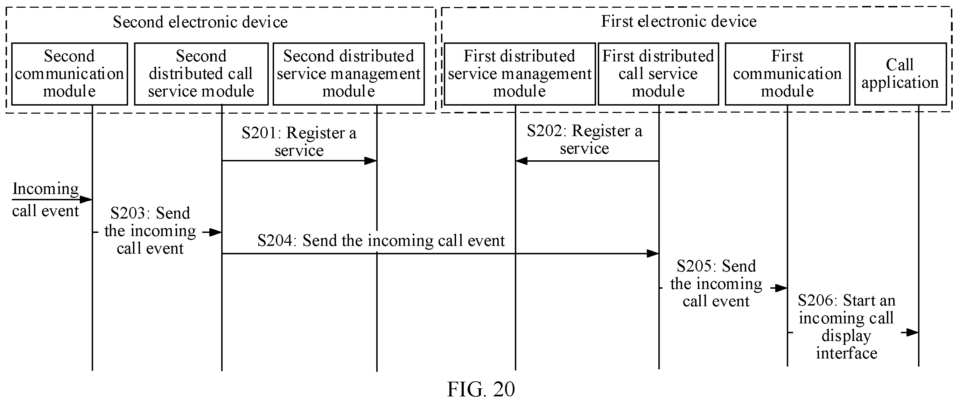

The scenario 1 and the scenario 2 are both scenarios in which when the second electronic device receives an incoming call, the second electronic device synchronizes the incoming call event to the first electronic device, so that the first electronic device displays an incoming call display interface. For implementation processes of the two scenarios, refer to FIG. 20. The implementation process may specifically include the following steps.

S201: A second distributed call service module of the second electronic device registers a service to a second distributed service management module of the second electronic device.

S202: A first distributed call service module of the first electronic device registers a service to a first distributed service management module of the first electronic device.

If an incoming call event needs to be synchronize between the first electronic device and the second electronic device, a service corresponding to synchronization of an incoming call event needs to be registered in the distributed service management module first.

Optionally, after the electronic devices complete service registration, distributed service management modules of the electronic devices may communication with each other, to exchange and store device information of the electronic devices. For example, the second distributed service management module of the second electronic device may obtain device information of the first electronic device, for example, information such as a device name and a device ID, and store the information, for example, store the information in a simultaneous ringing device list.

Optionally, the simultaneous ringing device list may be stored in a distributed service management module of a mobile phone in a form of a format, or may be stored in the distributed service management module of the mobile phone in another form.

In a feasible implementation, the simultaneous ringing device list may only include information of an electronic device that is in a trust chain and in an on-line state. For example, the distributed service management module of the electronic device may periodically check on-line states of electronic devices in the trust chain, refresh, based on a check result, electronic devices included in the simultaneous ringing device list, add information of an electronic device that is on-line but is not included in the current simultaneous ringing device list, and delete information of an electronic device that is off-line and is in the current simultaneous ringing device list.

S203: When the second electronic device receives an incoming call of a user of an opposite party, a second communication module of the second electronic device sends an incoming call event to the second distributed call service module of the second electronic device.

S204: After receiving the incoming call event, the second distributed call service module of the second electronic device sends the incoming call event to the first distributed call service module of the first electronic device.

Optionally, the incoming call event includes information such an incoming call user name, an incoming call number, a number registration location, and an operator, and further includes a device name and a type of the second electronic device. Optionally, the second electronic device may obtain the information such as the device name and the type from a system file of the second electronic device.

S205: The first distributed call service module of the first electronic device sends the incoming call event to the first communication module of the first electronic device.

S206: The first communication module of the first electronic device starts an incoming call display interface in a call application of the first electronic device based on the incoming call event, to preset a prompt manner to prompt the incoming call.

Optionally, the incoming call display interface may be any one of the interfaces shown in FIG. 5 to FIG. 10. In addition, the incoming call display interface may alternatively be one of an application icon prompt interface, a pop-up window prompt interface, a floating window prompt interface, a banner prompt interface, or the like. This is not limited in this embodiment of this application. Optionally, the preset prompt manner may include mute prompt, sound prompt, vibration prompt, sound and vibration prompt, and the like.

In the foregoing embodiment, the second electronic device synchronizes the incoming call event that includes the device name and the type to the first electronic device, so that the first electronic device can display the device information of the second electronic device that synchronizes the incoming call. In this way, the user can immediately learn which electronic device is called, which is convenient for the user to determine whether to answer the call, thereby improving user use experience.

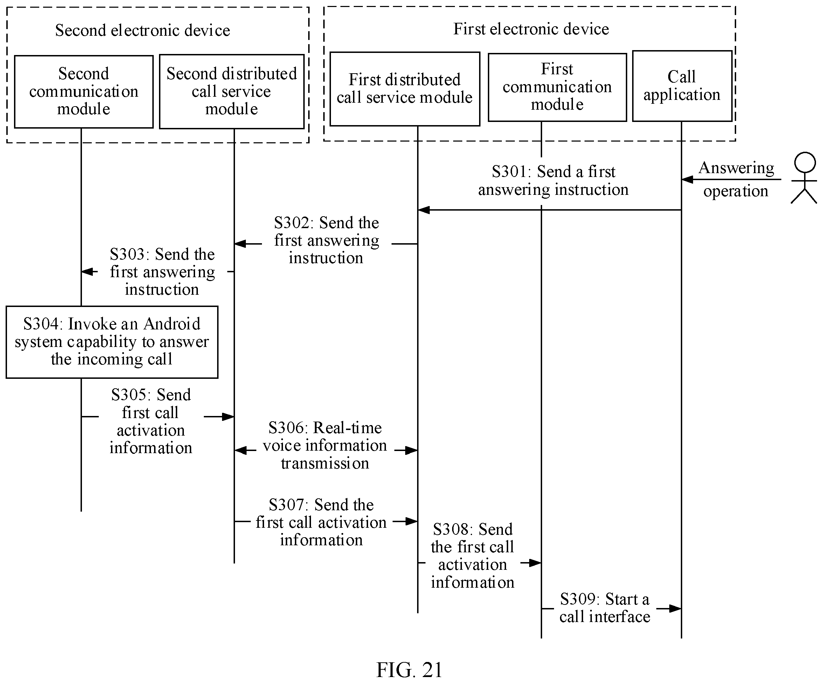

The three scenarios are scenarios in which the user enters a call state after the first electronic device answers the incoming call. It is assumed that the user taps an answering control (for example, the answering control 54 in FIG. 5 to FIG. 10) in the incoming call display interface of the first electronic device, to answer a current incoming call. As shown in FIG. 21, the following steps may be further performed.

S301: In response to an answering operation of the user, the call application of the first electronic device sends a first answering instruction to the first distributed call service module of the first electronic device.

The first answering instruction is used to indicate that the user has answered the current incoming call.

S302: The first distributed call service module of the first electronic device sends the first answering instruction to the second distributed call service module of the second electronic device.

S303: The second distributed call service module of the second electronic device sends the first answering instruction to the second communication module of the second electronic device.

S304: In response to the first answering instruction, the second communication module of the second electronic device invokes an Android system capability to answer the incoming call.

For a technology in which the communication module invokes the Android system capability to answer the incoming call, refer to an existing related technology. Details are not described herein.

S305: The second communication module of the second electronic device sends first call activation information to the second distributed call service module of the second electronic device.

The first call activation information is used to indicate that a call corresponding to the current incoming call is activated, that is, answered.

Optionally, after receiving the first call activation information, the second distributed call service module of the second electronic device may further bond identification information of the current call with an ID of a device (namely, the first electronic device) that process the call, that is, establish an association relationship between the identification information of the current call and the ID of the device that processes the call, to facilitate subsequent management of the call, for example, query for the device that processes the call based on the call identification information.

S306: The second distributed call service module of the second electronic device performs real-time voice information transmission with the first distributed call service module of the first electronic device through a pre-established voice transmission channel.

Optionally, after registering the service, the second distributed call service module of the second electronic device and the first distributed call service module of the first electronic device may establish a voice transmission channel to transmit real-time voice information.

S307: In this case, the second distributed call service module of the second electronic device sends the first call activation information to the first distributed call service module of the first electronic device.

S308: The first distributed call service module of the first electronic device sends the first call activation information to the first communication module of the first electronic device.

S309: The first communication module of the first electronic device refreshes a display information in the call application based on the first call activation information, to start a call interface.

Optionally, the call interface displayed by the first electronic device may be the interface shown in FIG. 11 or FIG. 12, that is, the information such as the device name and the type of the second electronic device is displayed on the call interface.

Optionally, because when receiving an incoming call, the second electronic device synchronizes an incoming call event to all first electronic devices in a trust chain, if one first electronic device answers the incoming call, other electronic devices do not need to continue to display an incoming call display interface. Therefore, after the first electronic device answers the incoming call, the second distributed call service module of the second electronic device may further send an incoming call display stop instruction to another first electronic device other than the device that answers the incoming call. The instruction is used to notify the another electronic device that the incoming call is answered, and instruct the another electronic device to stop incoming call display.

In the foregoing embodiment, after the first electronic device answers an incoming call, the first electronic device may display the information such as the device name and the type of the second electronic device in the call interface. In this way, the user can check which mobile phone is called at any time in a call process. This improves user use experience.

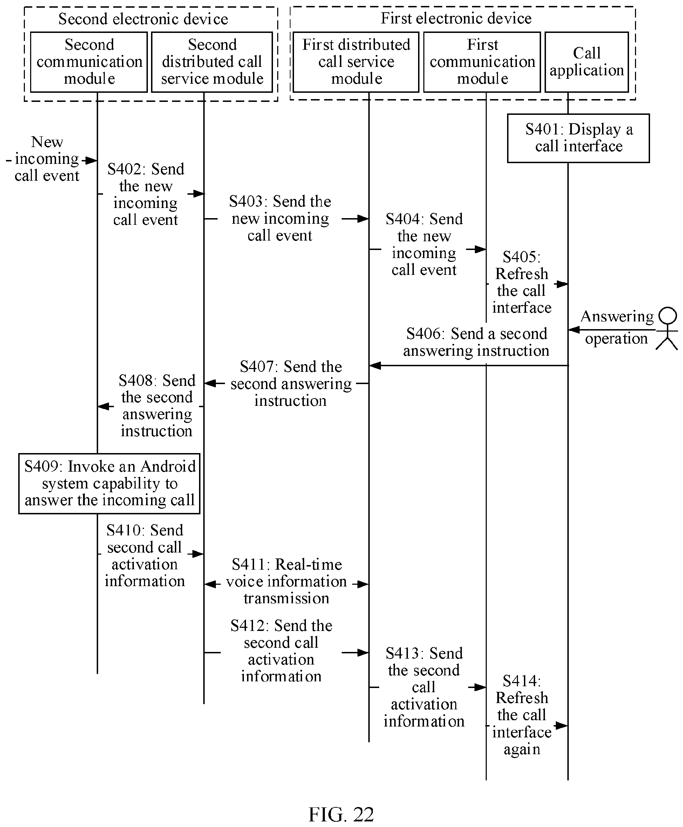

The foregoing fourth scenario is a scenario in which when the user is answering a call of a user of an opposite party, another user of an opposite party also calls the user, and a current call is held on. For an implementation process of the scenario, refer to FIG. 22. The implementation process may specifically include the following steps.

S401: The call application of the first electronic device displays a call interface.

S402: The second communication module of the second electronic device sends a new incoming call event to the second distributed call service module of the second electronic device.

S403: After receiving the new incoming call event, the second distributed call service module of the second electronic device sends the new incoming call event to the first distributed call service module of the first electronic device.

Optionally, the new incoming call event includes information such an incoming call user name, an incoming call number, a number registration location, and an operator, and further includes the device name and the type of the second electronic device.

S404: The first distributed call service module of the first electronic device sends the new incoming call event to the first communication module of the first electronic device.

S405: The first communication module of the first electronic device refreshes the call interface in the call application of the first electronic device based on the new incoming call event.

Optionally, for a displayed refreshed call interface, refer to FIG. 13. That is, information of the first incoming call event and information of the new incoming call event are simultaneously displayed on the current interface.

If the user answers a new incoming call on the first electronic device, the following steps need to be further performed.

S406: In response to an answering operation of the user, the call application of the first electronic device sends a second answering instruction to the first distributed call service module of the first electronic device.

The second answering instruction is used to indicate that the user has answered the new incoming call.

S407: The first distributed call service module of the first electronic device sends the second answering instruction to the second distributed call service module of the second electronic device.

S408: The second distributed call service module of the second electronic device sends the second answering instruction to the second communication module of the second electronic device.

S409: In response to the second answering instruction, the second communication module of the second electronic device invokes the Android system capability to answer the incoming call.

S410: The second communication module of the second electronic device sends second call activation information to the second distributed call service module of the second electronic device.

S411: The second distributed call service module of the second electronic device performs real-time voice information transmission with the first distributed call service module of the first electronic device through the pre-established voice transmission channel.

S412: The second distributed call service module of the second electronic device sends the second call activation information to the first distributed call service module of the first electronic device.

S413: The first distributed call service module of the first electronic device sends the second call activation information to the first communication module of the first electronic device.

S414: The first communication module of the first electronic device refreshes the call interface in the call application again based on the second call activation information.

For implementation processes of the steps S406 to S414, refer to the foregoing process of S301 to S309. Details are not described herein again. Optionally, for a display effect of refreshing the call interface again by the first electronic device, refer to the FIG. 14.

In this embodiment, after the first electronic device answers an incoming call, if the second electronic device further synchronizes a new incoming call, the first electronic device may simultaneously display information of a plurality of incoming calls in the incoming call interface, and display the device information of the second electronic device. In this way, the user can check which call is currently performed at any time in a call process, and which device synchronizes the call. This improves user use experience.

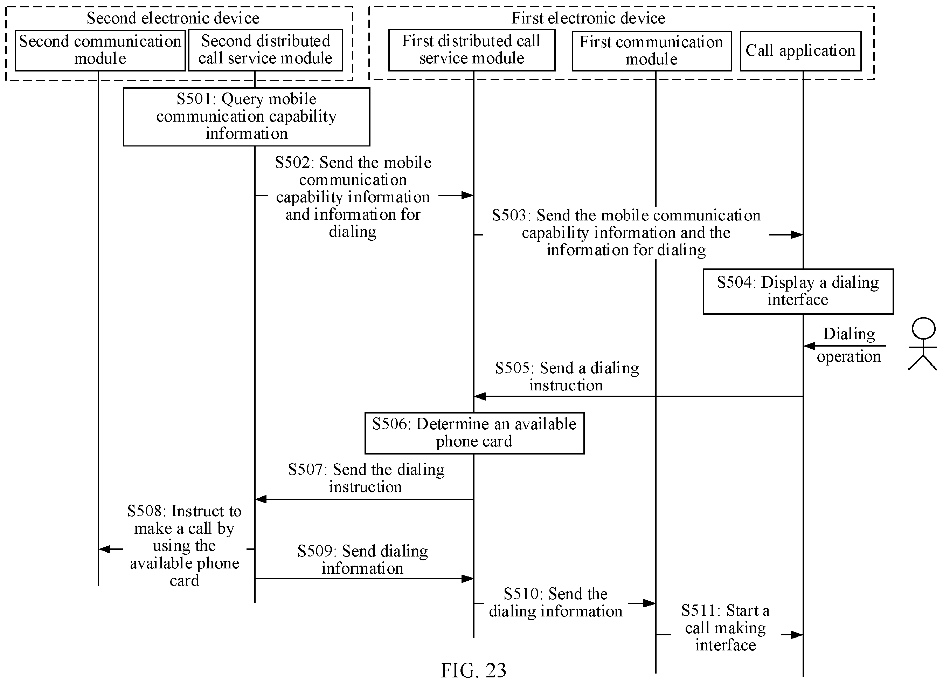

The foregoing fifth scenario is a scenario in which the first electronic device that does not has the mobile communication capability can make a call by using the mobile communication capability of the second electronic device. This requires the second electronic device to synchronize information such as a dialing keyboard, a contact, a call record to the first electronic device. For an implementation process, refer to FIG. 23. The process may specifically include the following steps.

S501: The second distributed call service module of the second electronic device queries mobile communication capability information of the second electronic device.

The mobile communication capability information may include an available phone card, that is, a phone card whose state is an available state, or a phone card that is disposed in an electronic device and can enable the electronic device to access a corresponding mobile communication system.

S502: The second distributed call service module of the second electronic device sends the mobile communication capability information of the second electronic device and dialable informationto the first distributed call service module of the first electronic device.

Optionally, the dialable informationmay include information such as a dialing keyboard, a contact, and a call record.

S503: The first distributed call service module of the first electronic device sends the mobile communication capability information of the second electronic device and the dialable informationto the call application of the first electronic device.

S504: After receiving the mobile communication capability information and the dialable information, the call application of the first electronic device displays a dialing interface.

Optionally, for the dialing interface displayed by the first electronic device, refer to the interface shown in FIG. 15.

If the user input a dialing operation in the interface shown in FIG. 15, the following operations are further performed.

S505: In response to the dialing operation of the user, the call application of the first electronic device sends a dialing instruction to the first distributed call service module of the first electronic device.

S506: The first distributed call service module of the first electronic device determines an available phone card based on the mobile communication capability information of the second electronic device.

Optionally, when it is determined that there is no available phone card, the first distributed call service module of the first electronic device may indicate the call application that a dialing control used to trigger a super call function is unavailable. When it is determined that there is an available phone card, the first distributed call service module of the first electronic device may indicate the call application that the dialing control used to trigger a super call function is available.

S507: The first distributed call service module of the first electronic device sends the dialing instruction to the second distributed call service module of the second electronic device.

The dialing instruction may carry information of the determined available phone card, to instruct the second electronic device to use the available phone card for dialing.

S508: The second distributed call service module of the second electronic device indicates the second communication module of the second electronic device to make a call by using the available phone card.

The second communication module of the second electronic device may perform dialing by indicating the second communication module of the second electronic device to invoke a modem.

When the second electronic device starts to perform dialing, the following steps may be further performed.

S509: The second distributed call service module of the second electronic device sends dialing information to the first distributed call service module of the first electronic device.

Optionally, the dialing information may include the device name and the type of the second electronic device.

S510: The first distributed call service module of the first electronic device sends the dialing information to the first communication module of the first electronic device.

S511: The first communication module of the first electronic device starts a call making interface in the call application of the first electronic device based on the dialing information.

Optionally, for the call making interface displayed on the first electronic device, refer to FIG. 16 or FIG. 17. The device name and the type of the used second electronic device is displayed on the interface.

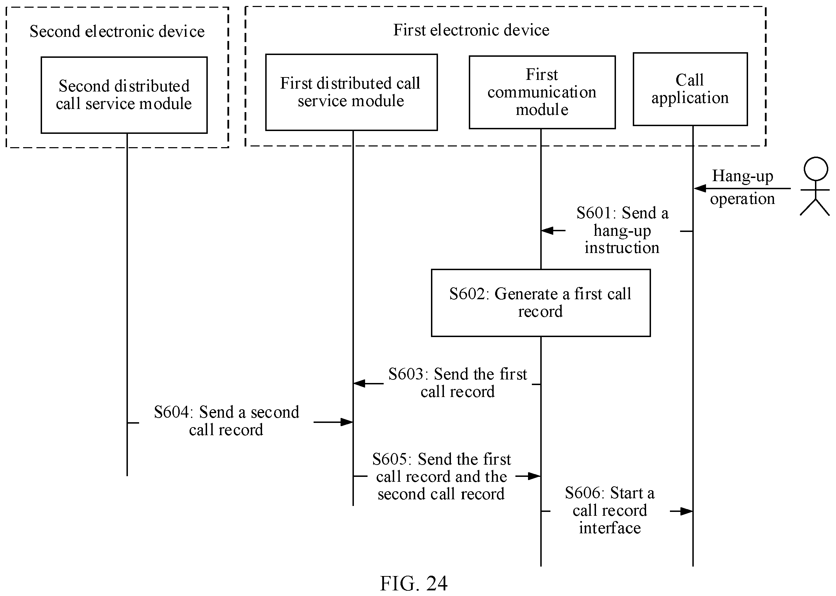

It can be learned from the foregoing fifth scenario that the first electronic device may further generate a call record and receive a call record synchronized by the second electronic device. For implementation steps of the process may be shown in FIG. 24. The process may specifically include the following steps.

S601: In response to a hang-up operation of the user, the call application of the first electronic device sends a hang-up instruction to the first communication module.

S602: The first communication module of the first electronic device generates a first call record according to the hang-up instruction.

Optionally, the first call record may include an incoming call user name or a calling user name, a call time, the device information of the used second electronic device, SIM card information, a registration location of a SIM card, and the like. The first call record is a record of a call answered by using the first electronic device.

S603: The first communication module of the first electronic device sends the first call record to the first distributed call service module of the first electronic device.

S604: The second distributed call service module of the second electronic device sends a second call record to the first distributed call service module of the first electronic device.

The second call record may include a call record generated by the second electronic device, or may include a call record that is received by the second electronic device and that is synchronized by another electronic device. It should be noted that an execution sequence of a process of S601 to S603 and a process of S604 is not limited in this embodiment of this application.

S605: The first distributed call service module of the first electronic device sends the first call record and the second call record to the first communication module of the first electronic device.

S606: The first communication module of the first electronic device starts a call record interface in the call application.

Optionally, for the call record interface displayed on the first electronic device, refer to FIG. 18. The device name and the type of the used second electronic device is displayed in the record of making a call by using the second electronic device.

In the embodiment, when the first electronic device makes a call by using the call capability of the second electronic device, the first electronic device may display the device information of the second electronic device, so that when making a call, the user can check which device is currently performing calling at any time. This improves user use experience.

The foregoing describes an example of an incoming call display method according to an embodiment of this application. It may be understood that to implement the foregoing functions, the electronic device includes corresponding hardware structures and/or software modules for performing the functions. A person skilled in the art should be easily aware that, in combination with the units and algorithm steps of the examples described in the embodiments disclosed in this specification, this application can be implemented by hardware or a combination of hardware and computer software. Whether a function is performed by hardware or computer software driving hardware depends on particular applications and design constraints of the technical solutions. A person of skill in the art may use different methods to implement the described functions with reference to embodiments for each particular application, but it should not be considered that the implementation goes beyond the scope of this application.

In embodiments of this application, function modules of the electronic device may be divided based on the foregoing method example. For example, each function module may be divided according to each function, or two or more functions may be integrated into one processing module. The integrated module may be implemented in the form of hardware, or may be implemented in a form of a software function module. It should be noted that in embodiments of this application, the module division is an example, and is merely logical function division, and there may be other division manners during actual implementation.

It should be noted that all related content of the steps in the foregoing method embodiments may be referenced to function descriptions of corresponding function modules. Details are not described herein again.

The electronic device provided in this embodiment is configured to perform the incoming call display method, and therefore may achieve the same effect as the foregoing method.

During use of an integrated unit, the electronic device may include a processing module, a storage module, and a communication module. The processing module is configured to control and manage an operation of the electronic device. The storage module may be configured to support the electronic device to store program code and data, or the like. The communication module may be configured to support communication between the electronic device and another device.

The processing module may be a processor or a controller. The processing module may implement or perform various examples of logic blocks, modules, and circuits described with reference to content disclosed in this application. The processor may alternatively be a combination for implementing computing functions, for example, a combination of one or more microprocessors, a combination of digital signal processing (digital signal processing, DSP) and microprocessors, or the like. The storage module may be a memory. The communication module may specifically be a device, such as a radio frequency circuit, a Bluetooth chip, and/or a Wi-Fi chip, that interacts with another electronic device.

In an embodiment, when the processing module is a processor and the storage module is a memory, the electronic device involved in this embodiment may be a device having the structure shown in FIG. 3.

An embodiment of this application provides a computer-readable storage medium. A computer program is stored in the computer-readable storage medium, and the computer program, when executed by a processor, enables the processor to perform the incoming call display method according to any one of the foregoing embodiments.

An embodiment of this application further provides a computer program product. When the computer program product runs on a computer, the computer is enabled to perform the related steps, to implement the incoming call display method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the incoming call display method in the foregoing method embodiments.

The electronic device, the computer-readable storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

Based on the foregoing descriptions of the implementations, a person skilled in the art may clearly understand that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above.

In the several embodiments provided in this application, it should be understood that the disclosed apparatus and method may be implemented in other manners. For example, the described apparatus embodiment is merely an example. For example, the module or the unit division is merely a logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in a plurality of different places. Some or all of the units may be selected according to actual needs to achieve the objectives of the solutions of embodiments.

In addition, function units in embodiments of this application may be integrated into one processing unit, or each of the units may be physically separated, or two or more units may be integrated into one unit. The integrated unit may be implemented in the form of hardware, or may be implemented in a form of a software function unit.

If the integrated unit is implemented in the form of a software function unit and sold or used as an independent product, the integrated unit may be stored in a readable storage medium. Based on such an understanding, the technical solutions in embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of the present invention. The storage medium includes: any medium that can store program code, such as a USB flash drive, a removable hard disk, a read only memory (read only memory, ROM), a random access memory (random access memory, RAM), a magnetic disk, or a compact disc.

## Claims

1. An incoming call display method, wherein the method is performed by a first electronic device (100), a short-distance communication connection is established between the first electronic device and a second electronic device, the first electronic device does not have an independent mobile communication capability, the second electronic device has the independent mobile communication capability, and the method comprises:
receiving (S201) a second incoming call event sent by the second electronic device, wherein the second incoming call event is generated by the second electronic device based on a second incoming call received by the second electronic device; and
in response to the second incoming call event, presenting (S206) an incoming call interface (10) of the second incoming call, wherein the incoming call interface of the second incoming call displays a phone number of a calling party of the second incoming call, a device name and/or a device type of the second electronic device, and a first incoming call mark, and the first incoming call mark indicates that the second incoming call is an incoming call that is received by the second electronic device and forwarded to the first electronic device, wherein the incoming call interface of the second incoming call further displays subscriber identification module SIM card information of a phone number of an answering party corresponding to the second incoming call in the second electronic device.

2. The method according to claim 1, wherein the device name and/or the device type of the second electronic device and the SIM card information are alternately displayed in the incoming call interface of the second incoming call.

3. The method according to any one of claims 1 and 2, wherein the incoming call interface of the second incoming call is presented in a display of the first electronic device in a full-screen display manner, or is presented in the display of the first electronic device in a notification bar display manner.

4. The method according to claim 3, wherein when the incoming call interface of the second incoming call is presented in the full-screen display manner, the incoming call interface of the second incoming call further displays a first answering control, and the first incoming call mark is displayed on the first answering control.

5. The method according to claim 3, wherein when the incoming call interface of the second incoming call is presented in the notification bar display manner, the first incoming call mark comprises a first icon, and a display location of the first icon is in front of a display location of the device name and/or the device type of the second electronic device.

6. The method according to claim 5, wherein the first incoming call mark further comprises a second icon, the incoming call interface of the second incoming call further displays a first answering control, the second icon is displayed on the first answering control, and the second icon and the first answering control are displayed after the first icon is displayed for preset duration.

7. The method according to claim 6, wherein when the second icon and the first answering control are displayed, the first icon disappears.

8. The method according to claim 4 or 6, wherein after the presenting an incoming call interface of the second incoming call, the method further comprises:
receiving a first touch operation by a user on the first answering control; and
in response to the first touch operation, presenting a call interface of the second incoming call, wherein the call interface of the second incoming call displays the phone number of the calling party of the second incoming call, the device name and/or the device type of the second electronic device, and call duration.

9. The method according to claim 8, wherein after the presenting a call interface of the second incoming call, the method further comprises:
receiving a third incoming call event sent by the second electronic device, wherein the third incoming call event is generated by the second electronic device based on a third incoming call received by the second electronic device; and
in response to the third incoming call event, simultaneously presenting the call interface of the second incoming call and an incoming call interface of the third incoming call, wherein the incoming call interface of the third incoming call displays a phone number of a calling party of the third incoming call, the device name and/or the device type of the second electronic device, and a second incoming call mark, and the second incoming call mark indicates that the third incoming call is an incoming call that is received by the second electronic device and forwarded to the first electronic device.

10. The method according to claim 9, wherein the incoming call interface of the third incoming call comprises a second answering control, and after the presenting the call interface of the second incoming call and an incoming call interface of the third incoming call, the method further comprises:
receiving a second touch operation by the user on the second answering control; and
in response to the second touch operation, presenting a call interface of the third incoming call, wherein the call interface of the third incoming call displays the phone number of the calling party of the third incoming call, the device name and/or the device type of the second electronic device, call duration, and call status information of the second incoming call, and the call status information indicates that a call corresponding to the second incoming call is in an on-hold state.

11. The method according to any one of claims 8 to 10, wherein the call interface of the second incoming call comprises a hang-up control, and the method further comprises:
receiving a third touch operation by the user on the hang-up control; and
in response to the third touch operation, generating and displaying a call record corresponding to the second incoming call, wherein the call record comprises the device name and/or the device type of the second electronic device.

12. The method according to any one of claims 1 to 11, wherein the method further comprises:
receiving a call making operation of the user; and
in response to the call making operation, invoking the mobile communication capability of the second electronic device to make a call, and presenting a call making interface, wherein the call making interface displays a called phone number and the device name and/or the device type of the second electronic device.

13. An electronic device, wherein the electronic device comprises:
one or more processors; and
one or more memories, wherein
the one or more memories store one or more programs, and when the one or more programs are executed by the processor, the electronic device is enabled to perform the method according to any one of claims 1 to 12.

## Patentansprüche

1. Ein Verfahren zur Anzeige eines eingehenden Anrufs, wobei das Verfahren von einer ersten elektronischen Vorrichtung (100) ausgeführt wird, eine Nahbereichskommunikationsverbindung zwischen der ersten elektronischen Vorrichtung und einer zweiten elektronischen Vorrichtung hergestellt wird, die erste elektronische Vorrichtung über keine eigenständige mobile Kommunikationsfähigkeit verfügt, die zweite elektronische Vorrichtung jedoch über die eigenständige mobile Kommunikationsfähigkeit verfügt, und das Verfahren Folgendes umfasst:
Empfangen (S201) eines zweiten eingehenden Anrufereignisses, das von der zweiten elektronischen Vorrichtung gesendet wird, wobei das zweite eingehende Anrufereignis von der zweiten elektronischen Vorrichtung basierend auf einem zweiten eingehenden Anruf, den die zweite elektronische Vorrichtung empfängt, erzeugt wird; und
Als Reaktion auf das zweite eingehende Anrufereignis wird eine Anrufoberfläche (S206) des zweiten eingehenden Anrufs angezeigt, wobei die Anrufoberfläche des zweiten eingehenden Anrufs eine Telefonnummer der anrufenden Partei des zweiten eingehenden Anrufs, einen Gerätenamen und/oder einen Gerätetyp der zweiten elektronischen Vorrichtung sowie eine erste Eingehend-Anruf-Markierung zeigt, und die erste Eingehend-Anruf-Markierung zeigt an, dass der zweite eingehende Anruf ein von der zweiten elektronischen Vorrichtung empfangener und an die erste elektronische Vorrichtung weitergeleiteter Anruf ist, wobei die Anrufoberfläche des zweiten eingehenden Anrufs außerdem Informationen zur SIM-Karte (Subscriber Identification Module) der Telefonnummer der antwortenden Partei zeigt, die dem zweiten eingehenden Anruf in der zweiten elektronischen Vorrichtung entspricht.

2. Verfahren nach Anspruch 1, wobei der Gerätename und/oder der Gerätetyp der zweiten elektronischen Vorrichtung sowie die SIM-Karteninformationen abwechselnd in der Anrufoberfläche des zweiten eingehenden Anrufs angezeigt werden.

3. Verfahren nach einem der Ansprüche 1 und 2, wobei die Anrufoberfläche des zweiten eingehenden Anrufs auf dem Display der ersten elektronischen Vorrichtung als Vollbildanzeige oder als Benachrichtigungsleistenanzeige präsentiert wird.

4. Verfahren nach Anspruch 3, wobei, wenn die Anrufoberfläche des zweiten eingehenden Anrufs als Vollbildanzeige präsentiert wird, die Anrufoberfläche des zweiten eingehenden Anrufs zusätzlich eine erste Antwortsteuerung anzeigt und die erste Eingehend-Anruf-Markierung auf der ersten Antwortsteuerung angezeigt wird.

5. Verfahren nach Anspruch 3, wobei, wenn die Anrufoberfläche des zweiten eingehenden Anrufs als Benachrichtigungsleistenanzeige präsentiert wird, die erste Eingehend-Anruf-Markierung ein erstes Symbol umfasst und der Anzeigeort des ersten Symbols sich vor dem Anzeigeort des Gerätenamens und/oder des Gerätetyps der zweiten elektronischen Vorrichtung befindet.

6. Verfahren gemäß Anspruch 5, wobei die erste eingehende Anrufmarkierung außerdem ein zweites Symbol umfasst, die Eingehende-Anruf-Oberfläche des zweiten eingehenden Anrufs ferner eine erste Antwortsteuerung anzeigt, das zweite Symbol auf der ersten Antwortsteuerung angezeigt wird und das zweite Symbol sowie die erste Antwortsteuerung nach Anzeige des ersten Symbols für eine voreingestellte Dauer angezeigt werden.

7. Verfahren gemäß Anspruch 6, wobei beim Anzeigen des zweiten Symbols und der ersten Antwortsteuerung das erste Symbol verschwindet.

8. Verfahren gemäß Anspruch 4 oder 6, wobei nach der Anzeige einer Eingehende-Anruf-Oberfläche des zweiten eingehenden Anrufs das Verfahren außerdem folgendes umfasst:
Empfangen einer ersten Berührungsoperation eines Benutzers auf der ersten Antwortsteuerung; und
Als Antwort auf die erste Berührungsoperation wird eine Anrufoberfläche des zweiten eingehenden Anrufs angezeigt, wobei die Anrufoberfläche des zweiten eingehenden Anrufs die Telefonnummer des Anrufers des zweiten eingehenden Anrufs, den Gerätenamen und/oder den Gerätetyp des zweiten elektronischen Geräts sowie die Gesprächsdauer anzeigt.

9. Verfahren gemäß Anspruch 8, wobei nach der Anzeige einer Anrufoberfläche des zweiten eingehenden Anrufs das Verfahren außerdem folgendes umfasst:
Empfangen eines dritten eingehenden Anrufereignisses, das vom zweiten elektronischen Gerät gesendet wird, wobei das dritte eingehende Anrufereignis vom zweiten elektronischen Gerät basierend auf einem dritten eingehenden Anruf erzeugt wird, den das zweite elektronische Gerät empfangen hat; und
Als Antwort auf das dritte eingehende Anrufereignis werden gleichzeitig die Anrufoberfläche des zweiten eingehenden Anrufs und eine Eingehende-Anruf-Oberfläche des dritten eingehenden Anrufs angezeigt, wobei die Eingehende-Anruf-Oberfläche des dritten eingehenden Anrufs eine Telefonnummer des Anrufers des dritten eingehenden Anrufs, den Gerätenamen und/oder den Gerätetyp des zweiten elektronischen Geräts sowie eine zweite Eingehende-Anruf-Markierung anzeigt, und die zweite Eingehende-Anruf-Markierung zeigt an, dass der dritte eingehende Anruf ein eingehender Anruf ist, der vom zweiten elektronischen Gerät empfangen und zum ersten elektronischen Gerät weitergeleitet wird.

10. Verfahren gemäß Anspruch 9, wobei die Eingehende-Anruf-Oberfläche des dritten eingehenden Anrufs eine zweite Antwortsteuerung umfasst und nach der Anzeige der Anrufoberfläche des zweiten eingehenden Anrufs und einer Eingehende-Anruf-Oberfläche des dritten eingehenden Anrufs das Verfahren außerdem folgendes umfasst:
Empfangen einer zweiten Berührungsoperation des Benutzers auf der zweiten Antwortsteuerung; und
Als Reaktion auf die zweite Berührungsoperation wird eine Anrufoberfläche für den dritten eingehenden Anruf angezeigt, wobei die Anrufoberfläche des dritten eingehenden Anrufs die Telefonnummer der anrufenden Partei des dritten eingehenden Anrufs, den Gerätenamen und/oder den Gerätetyp des zweiten elektronischen Geräts, die Anrufdauer sowie die Anrufstatusinformationen des zweiten eingehenden Anrufs anzeigt, und die Anrufstatusinformationen geben an, dass der Anruf entsprechend dem zweiten eingehenden Anruf gehalten wird.

11. Verfahren nach einem der Ansprüche 8 bis 10, wobei die Anrufoberfläche des zweiten eingehenden Anrufs eine Auflege-Steuerung umfasst, und das Verfahren weiterhin Folgendes umfasst:
den Empfang einer dritten Berührungsoperation des Nutzers auf der Auflege-Steuerung; und
Als Reaktion auf die dritte Berührungsoperation wird ein Anrufprotokoll angezeigt und generiert, das dem zweiten eingehenden Anruf entspricht, wobei das Anrufprotokoll den Gerätenamen und/oder den Gerätetyp des zweiten elektronischen Geräts umfasst.

12. Verfahren nach einem der Ansprüche 1 bis 11, wobei das Verfahren weiterhin Folgendes umfasst:
den Empfang einer Anrufauslöseoperation des Nutzers; und
Als Reaktion auf die Anrufauslöseoperation wird die Mobilkommunikationsfunktion des zweiten elektronischen Geräts zum Tätigen eines Anrufs aktiviert und eine Anrufoberfläche gezeigt, wobei die Anrufoberfläche die angerufene Telefonnummer sowie den Gerätenamen und/oder den Gerätetyp des zweiten elektronischen Geräts anzeigt.

13. Eine elektronische Vorrichtung, wobei die elektronische Vorrichtung Folgendes umfasst:
einen oder mehrere Prozessoren; und
einen oder mehrere Speicher, wobei
die einen oder mehrere Speicher ein oder mehrere Programme speichern und wenn das oder die Programme vom Prozessor ausgeführt werden, ist die elektronische Vorrichtung in der Lage, das Verfahren gemäß einem der Ansprüche 1 bis 12 auszuführen.

## Revendications

1. Procédé d'affichage d'un appel entrant, dans lequel le procédé est réalisé par un premier dispositif électronique (100), une connexion de communication à courte distance étant établie entre le premier dispositif électronique et un second dispositif électronique, le premier dispositif électronique ne possédant pas de capacité de communication mobile indépendante, le second dispositif électronique possédant une capacité de communication mobile indépendante, et le procédé comprenant :
réception (S201) d'un second événement d'appel entrant envoyé par le second dispositif électronique, ledit deuxième événement d'appel entrant étant généré par le second dispositif électronique en fonction d'un deuxième appel entrant reçu par ce dernier ; et
en réponse au deuxième événement d'appel entrant, présentation (S206) d'une interface d'appel entrant (10) du deuxième appel entrant, l'interface d'appel entrant du deuxième appel affichant un numéro de téléphone de l'appelant du deuxième appel entrant, un nom de dispositif et/ou un type de dispositif du second dispositif électronique, et une première marque d'appel entrant, ladite première marque d'appel entrant indiquant que le deuxième appel entrant est un appel reçu par le second dispositif électronique et transféré au premier dispositif électronique, l'interface d'appel entrant du deuxième appel affichant en outre les informations de carte SIM (module d'identification d'abonné) du numéro de téléphone du destinataire correspondant au deuxième appel entrant dans le second dispositif électronique.

2. Procédé selon la revendication 1, dans lequel le nom du dispositif et/ou le type de dispositif du second dispositif électronique et les informations de la carte SIM sont affichés de manière alternée dans l'interface d'appel entrant du deuxième appel.

3. Procédé selon l'une quelconque des revendications 1 ou 2, dans lequel l'interface d'appel entrant du deuxième appel s'affiche sur l'écran du premier dispositif électronique en mode d'affichage plein écran, ou s'affiche sur l'écran du premier dispositif électronique dans la barre de notification.

4. Procédé selon la revendication 3, dans lequel, lorsque l'interface d'appel entrant du deuxième appel s'affiche en mode plein écran, elle affiche en outre un premier contrôle de réponse, et la première marque d'appel entrant s'affiche sur ce premier contrôle de réponse.

5. Procédé selon la revendication 3, dans lequel, lorsque l'interface d'appel entrant du deuxième appel s'affiche dans la barre de notification, la première marque d'appel entrant comporte une première icône, et la position d'affichage de cette première icône est située devant celle du nom du dispositif et/ou du type de dispositif du second dispositif électronique.

6. Procédé selon la revendication 5, dans lequel la première marque d'appel entrant comprend également une seconde icône, l'interface d'appel entrant du second appel entrant affiche en outre un premier contrôle de réponse, la seconde icône est affichée sur le premier contrôle de réponse, et la seconde icône ainsi que le premier contrôle de réponse sont affichés après que la première icône a été affichée pendant une durée prédéfinie.

7. Procédé selon la revendication 6, dans lequel, lorsque la seconde icône et le premier contrôle de réponse sont affichés, la première icône disparaît.

8. Procédé selon la revendication 4 ou 6, dans lequel, après la présentation d'une interface d'appel entrant du second appel entrant, le procédé comprend en outre :
recevoir une première opération tactile de la part de l'utilisateur sur le premier contrôle de réponse ; et
en réponse à la première opération tactile, présenter une interface d'appel du second appel entrant, dans laquelle l'interface d'appel du second appel entrant affiche le numéro de téléphone de l'appelant du second appel entrant, le nom de l'appareil et/ou le type d'appareil du second dispositif électronique, et la durée de l'appel.

9. Procédé selon la revendication 8, dans lequel, après la présentation d'une interface d'appel du second appel entrant, le procédé comprend en outre :
recevoir un troisième événement d'appel entrant envoyé par le second dispositif électronique, où le troisième événement d'appel entrant est généré par le second dispositif électronique sur la base d'un troisième appel entrant reçu par le second dispositif électronique ; et
en réponse au troisième événement d'appel entrant, présenter simultanément l'interface d'appel du second appel entrant et une interface d'appel entrant du troisième appel entrant, dans laquelle l'interface d'appel entrant du troisième appel entrant affiche un numéro de téléphone de l'appelant du troisième appel entrant, le nom de l'appareil et/ou le type d'appareil du second dispositif électronique, et une seconde marque d'appel entrant, cette seconde marque d'appel entrant indiquant que le troisième appel entrant est un appel entrant reçu par le second dispositif électronique et transféré au premier dispositif électronique.

10. Procédé selon la revendication 9, dans lequel l'interface d'appel entrant du troisième appel entrant comprend un second contrôle de réponse, et, après la présentation de l'interface d'appel du second appel entrant et d'une interface d'appel entrant du troisième appel entrant, le procédé comprend en outre :
recevoir une seconde opération tactile de la part de l'utilisateur sur le second contrôle de réponse ; et
en réponse à la deuxième opération tactile, présentation d'une interface d'appel du troisième appel entrant, l'interface d'appel du troisième appel entrant affichant le numéro de téléphone de l'appelant du troisième appel entrant, le nom de l'appareil et/ou le type de l'appareil du deuxième dispositif électronique, la durée de l'appel ainsi que les informations d'état de l'appel du deuxième appel entrant, les informations d'état de l'appel indiquant qu'un appel correspondant au deuxième appel entrant est en attente.

11. Le procédé selon n'importe laquelle des revendications 8 à 10, dans lequel l'interface d'appel du deuxième appel entrant comprend un contrôle de raccroché, et le procédé comprend en outre :
réception par l'utilisateur d'une troisième opération tactile sur le contrôle de raccroché ; et
en réponse à la troisième opération tactile, génération et affichage d'un historique d'appel correspondant au deuxième appel entrant, l'historique d'appel comprenant le nom de l'appareil et/ou le type de l'appareil du deuxième dispositif électronique.

12. Le procédé selon l'une quelconque des revendications 1 à 11, dans lequel le procédé comprend en outre :
réception d'une opération d'émission d'appel de l'utilisateur ; et
en réponse à l'opération d'émission d'appel, utilisation de la capacité de communication mobile du deuxième dispositif électronique pour lancer un appel, et présentation d'une interface d'émission d'appel, l'interface affichant un numéro de téléphone appelé ainsi que le nom et/ou le type de l'appareil du deuxième dispositif électronique.

13. Un dispositif électronique, ledit dispositif électronique comprenant :
un ou plusieurs processeurs ; et
une ou plusieurs mémoires, dans lesquelles
lesdites mémoires stockent un ou plusieurs programmes, et lorsque lesdits programmes sont exécutés par le processeur, le dispositif électronique est apte à réaliser le procédé selon l'une quelconque des revendications 1 à 12.
